# EUROPEAN PATENT SPECIFICATION

(11) **EP 3 927 040 B1**
(45) Date of publication and mention of the grant of the patent: **18.09.2024**
(21) Application number: 20755087.2
(22) Date of filing: 21.01.2020
(51) Int. Cl.: H04L 1/1825, H04L 1/1829, H04W 72/02, H04W 76/14, H04L 1/1822, H04L 1/00, H04W 92/18

(54) **COMMUNICATION DEVICE AND COMMUNICATION METHOD**
KOMMUNIKATIONSVORRICHTUNG UND KOMMUNIKATIONSVERFAHREN
DISPOSITIF DE COMMUNICATION ET PROCÉDÉ DE COMMUNICATION

(30) Priority: 14.02.2019 JP 2019024211
(43) Date of publication of application: 22.12.2021
(73) Proprietor: Sony Group Corporation, Tokyo 108-0075 (JP)
(72) Inventor: KUSASHIMA, Naoki, Tokyo 108-0075 (JP); UCHIYAMA, Hiromasa, Tokyo 108-0075 (JP); TANG, Yifu, Tokyo 108-0075 (JP)
(74) Representative: Witte, Weller & Partner Patentanwälte mbB
(86) International application number: PCT/JP2020/001793
(87) International publication number: WO 2020/166280

(56) References cited:
- CMCC: "Discussion on HARQ feedback", vol. RAN WG1, no. Taipei; 20190121 - 20190125, 12 January 2019 (2019-01-12), pages 1 - 4, XP051576014, Retrieved from the Internet <URL:http://www.3gpp.org/ftp/tsg%5Fran/WG1%5FRL1/TSGR1%5FAH/NR%5FAH%5F1901/Docs/R1%2D1900405%2Ezip> [retrieved on 20190112]
- LG ELECTRONICS: "Feature lead summary for agenda item 7.2.4.1.2 Physical layer procedures", vol. RAN WG1, no. Taipei, Taiwan; 20190121 - 20190125, 25 January 2019 (2019-01-25), XP051601351, Retrieved from the Internet <URL:http://www.3gpp.org/ftp/tsg%5Fran/WG1%5FRL1/TSGR1%5FAH/NR%5FAH%5F1901/Docs/R1%2D1901439%2Ezip> [retrieved on 20190125]
- CATT: "Discussion on physical layer procedures in NR V2X", vol. RAN WG1, no. Taipei; 20190121 - 20190125, 12 January 2019 (2019-01-12), XP051575930, Retrieved from the Internet <URL:http://www.3gpp.org/ftp/tsg%5Fran/WG1%5FRL1/TSGR1%5FAH/NR%5FAH%5F1901/Docs/R1%2D1900321%2Ezip> [retrieved on 20190112]
- CMCC: "Discussion on HARQ feedback", vol. RAN WG1, no. Taipei; 20190121 - 20190125, 20 January 2019 (2019-01-20), XP051593319, Retrieved from the Internet <URL:http://www.3gpp.org/ftp/Meetings%5F3GPP%5FSYNC/RAN1/Docs/R1%2D1900405%2Ezip> [retrieved on 20190120]
- CMCC: "Discussion on HARQ feedback", 3GPP TSG RAN WG1 ADHOC_NR_AH_1901, R1-1900405, 12 January 2019 (2019-01-12), pages 1 - 2, XP051576014, Retrieved from the Internet <URL:http://www.3gpp.org/ftp/tsg_ran/WGl_RL1/TSGR1_AH/NR_AH_1901/Docs/R1-1900405.zip> [retrieved on 20200212]
- LG ELECTRONICS: "Feature lead summary for agenda item 7.2.4.1.2 Physical layer procedures", 3GPP TSG RAN WG1 ADHOC_NR_AH_1901, R1-1901439, 25 January 2019 (2019-01-25), XP051601351, Retrieved from the Internet <URL:http://www.3gpp.org/ftp/tsg_ran/WG1_RL1/TSGR1_AH/NR_AH_1901/Docs/R1-1901439.zip> [retrieved on 20200212]
- SONY: "Discussion on NR V2X resource allocation mechanism", 3CPP TSC RAN WC1 ADHOC_NR_AH_1901, R1-1900369, 11 January 2019 (2019-01-11), pages 3, XP051575978, Retrieved from the Internet <URL:http://www.3gpp.org/ftp/tsg_ran/WC1_RL1/TSCR1_AH/NR_AH_1901/Docs/R1-1900369.zip> [retrieved on 20200213]
- CATT: "Discussion on physical layer procedures in NR V2X", 3CPP TSC RAN WC1 ADHOC_NR_AH_1901, R1-1900321, 11 January 2019 (2019-01-11), pages 3, XP051575930, Retrieved from the Internet <URL:http://www.3gpp.org/ftp/tsg_ran/WC1_RL1/TSCR1_AH/NR_AH_1901/Docs/R1-1900321.zip> [retrieved on 20200213]
- LG ELECTRONICS: "Discussion on physical layer structure for NR V2X", 3GPP TSG RAN WG1 ADHOC_NR_AH_1901, R1-1901335, 21 January 2019 (2019-01-21), XP051601273, Retrieved from the Internet <URL:http://www.3gpp.org/ftp/tsg_ran/WC1_RL1/TSCR1_AH1/NR_AH_1901/Docs/R1-1901335.zip> [retrieved on 20200213]

## Description

### Field

The present disclosure relates to a communication device and a communication method.

### Background

Various radio access schemes and radio networks in cellular mobile communications (hereinafter, "Long Term Evolution (LTE)", "LTE-Advanced (LTE-A)", "LTE-Advanced Pro (LTE-A Pro) ", "New Radio (NR)", "New Radio Access Technology (NRAT)", "Evolved Universal Terrestrial Radio Access (EUTRA)", or "Further EUTRA (FEUTRA)") are under examination in Third Generation Partnership Project (3GPP). In the following description, LTE includes LTE-A, LTE-A Pro, and EUTRA, and NR includes NRAT and FEUTRA. In LTE and NR, a base station device (base station) is also referred to as an evolved Node B (eNodeB), and a terminal device (mobile station, mobile station device, or terminal) is also referred to as User Equipment (UE). LTE and NR are cellular communication systems that arranges a plurality of areas covered by the base station device, as cellular areas. A single base station device may manage a plurality of cells.

LTE has supported various types of vehicle-to-anything (V2X) communications in automobiles such as vehicle-to-vehicle (V2V) communication, vehicle-to-pedestrian (V2P) communication, and vehicle-to-infrastructure/network (V2I/N) communication. V2X in LTE supports use cases such as driving assistance, autonomous driving, and warning to pedestrians. To support V2X, a sidelink (also referred to as Device to Device (D2D) communication) is used.

Furthermore, in NR, in addition to supporting LTE V2X use cases, it is required to support use cases with higher requirement conditions, such as vehicles platooning, sensor sharing (extended sensors), advanced driving, remote driving, or the like. In order to support these use cases, higher throughput and low latency/high reliability are required, for which operations in a millimeter wave such as a 60 GHz band have also been considered. Details of NR V2X are disclosed in Non Patent Literature 1.

### Citation List

### Non Patent Literature

Non Patent Literature 1: RP -181429, Vodafone, "New SID: Study on NR V2X," 3GPP TSG RAN Meeting # 80, La Jolla, USA, June 11th-14th, 2018.

CMCC, "Discussion on HARQ feedback", vol. RAN WG1, no. Taipei; 20190121 - 20190125, (20190112), pages 1 - 4, 3GPP DRAFT; R1-1900405, 3GPP discloses a proposal for resource allocation of PSFCH which may be implicitly indicated by PSCCH/PSSCH resource and/or explicitly indicated in SCI.

Further prior art can be found in:
LG ELECTRONICS, "Feature lead summary for agenda item 7.2.4.1.2 Physical layer procedures", vol. RAN WG1, no. Taipei, Taiwan; 20190121 - 20190125, (20190125), 3GPP DRAFT; R1-1901439 UPDATED FEATURE LEAD SUMMARY OF PHY PROCEDURE IN NR V2X, 3GPP;
CATT, "Discussion on physical layer procedures in NR V2X", vol. RAN WG1, no. Taipei; 20190121 - 20190125, (20190112), 3GPP DRAFT; R1-1900321, 3GPP;
CMCC, "Discussion on HARQ feedback", vol. RAN WG1, no.
Taipei; 20190121 - 20190125, (20190120), 3GPP DRAFT; R1-1900405, 3GPP.

### Summary

### Technical Problem

Meanwhile, conventional D2D and V2X have supported broadcast communication. In contrast, in order to support various use cases as described above NR V2X has examined supporting unicast communication and groupcast (multicast) communication in addition to broadcast communication. With this background, in order to realize highly efficient unicast communication and groupcast communication in inter-device communication between terminal devices represented by NR V2X, there is a demand, in the inter-device communication, for application of a technology of providing feedback of a response according to data reception results, such as HARQ, to a transmission-side device.

In view of this, the present disclosure proposes a technology capable of realizing feedback of a response according to data reception results in a more preferable manner in inter-device communication implemented between terminal devices.

### Solution to Problem

According to the present disclosure, first and second terminal devices and corresponding methods are presented as defined in the claims.

### Brief Description of Drawings

FIG. 1 is a diagram illustrating an outline of sidelink communication according to an embodiment of the present disclosure.
FIG. 2 is a schematic block diagram illustrating a configuration of a base station device of the embodiment.
FIG. 3 is a schematic block diagram illustrating a configuration of a terminal device of the embodiment.
FIG. 4 is a diagram illustrating an example of sidelink dynamic resource pool allocation.
FIG. 5 is a diagram illustrating another example of sidelink dynamic resource pool allocation.
FIG. 6 is a diagram illustrating another example of sidelink dynamic resource pool allocation.
FIG. 7 is a diagram illustrating another example of sidelink dynamic resource pool allocation.
FIG. 8 is a diagram illustrating another example of sidelink dynamic resource pool allocation.
FIG. 9 is a diagram illustrating an outline of an example of a method of arranging resources usable for HARQ.
FIG. 10 is a diagram illustrating an outline of another example of the method of arranging resources usable for HARQ.
FIG. 11 is a diagram illustrating an outline of another example of the method of arranging resources usable for HARQ.
FIG. 12 is a diagram illustrating an overview of AGC symbols.
FIG. 13 is a block diagram illustrating a first example of a schematic configuration of an eNB.
FIG. 14 is a block diagram illustrating a second example of a schematic configuration of an eNB.
FIG. 15 is a block diagram illustrating an example of a schematic configuration of a smartphone.
FIG. 16 is a block diagram illustrating an example of a schematic configuration of a car navigator.

### Description of Embodiments

A preferred embodiment of the present disclosure will be described in detail hereinbelow with reference to the accompanying drawings. Note that redundant descriptions will be omitted from the present specification and the drawings by assigning the same reference signs to components having substantially the same functional configuration.

Note that the description will be provided in the following order.
1. Introduction
2. Technical problems
3. Technical features
4. Application examples
4.1. Application examples related to base station
4.2. Application examples related to terminal device
5. Conclusion

### <<1. Introduction >>

A preferred embodiment of the present disclosure will be described in detail hereinbelow with reference to the accompanying drawings. Note that redundant descriptions will be omitted from the present specification and the drawings by assigning the same reference signs to components having substantially the same functional configuration. In addition, unless otherwise specified, the techniques, functionalities, methods, configurations, procedures, and all other descriptions described below are applicable to LTE and NR.

### <Radio Communication System in Present Embodiment>

In the present embodiment, the radio communication system includes at least a base station device 1 and a terminal device 2. The base station device 1 can accommodate a plurality of terminal devices. The base station device 1 can be connected to another base station device by means of an X2 interface. Furthermore, the base station device 1 can be connected to an evolved packet core (EPC) by means of an S1 interface. Still further, the base station device 1 can be connected to a mobility management entity (MME) by means of an S1-MME interface, and can be connected to a serving gateway (S-GW) by means of an S1-U interface. The S1 interface supports a many-to-many connection between the MME and/or the S-GW and the base station device 1. In the present embodiment, the base station device 1 and the terminal device 2 each support LTE and/or NR, individually.

### <Overview of Sidelink Communication in Present Embodiment>

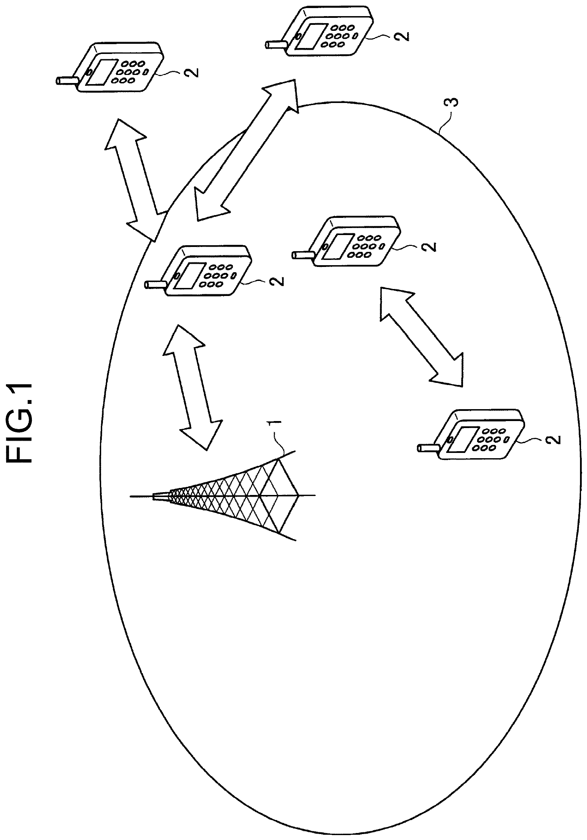

FIG. 1 is a diagram illustrating an outline of sidelink communication according to the present embodiment. There is an exemplary use case where two or more terminal devices 2 exist inside a cell 3 formed by the base station device 1, and sidelink communication is performed between the terminal devices 2. Furthermore, there is another exemplary use case where sidelink communication is performed between two or more terminal devices 2 in a situation where at least one of the two or more terminal devices 2 exists inside the cell 3 formed by the base station device 1 and the other terminal device 2 exists outside the cell 3. Furthermore, by communicating with the base station device 1, the terminal device 2 existing inside the cell 3 can relay communication between the base station device 1 and the terminal device 2 existing outside the cell 3.

Incidentally, the state in which the terminal device 2 exists inside the cell 3 indicates a state in which the quality of the downlink signal received by the terminal device 2 from the base station device 1 is a predetermined standard or more. In addition, the state in which the terminal device 2 exists inside the cell 3 indicates a state in which the probability that the downlink channel received by the terminal device 2 from the base station device 1 is decodable is a predetermined probability or more. In other words, the state in which the terminal device 2 exists outside the cell 3 indicates a state in which the quality of the downlink signal received by the terminal device 2 from the base station device 1 is below a predetermined standard. In addition, the state in which the terminal device 2 exists outside the cell 3 indicates a state in which the probability that the downlink channel received by the terminal device 2 from the base station device 1 is decodable is not a predetermined probability or more.

Hereinafter, in the present embodiment, two terminal devices that perform transmission and reception by sidelink communication are also referred to as a first terminal device and a second terminal device. In the present embodiment in particular, a terminal device that receives information regarding sidelink communication from a base station device and transmits a sidelink control channel will be referred to as the first terminal device, and the other terminal device will be referred to as the second terminal device in some cases.

### <Configuration Example of Base Station Device in Present Embodiment>

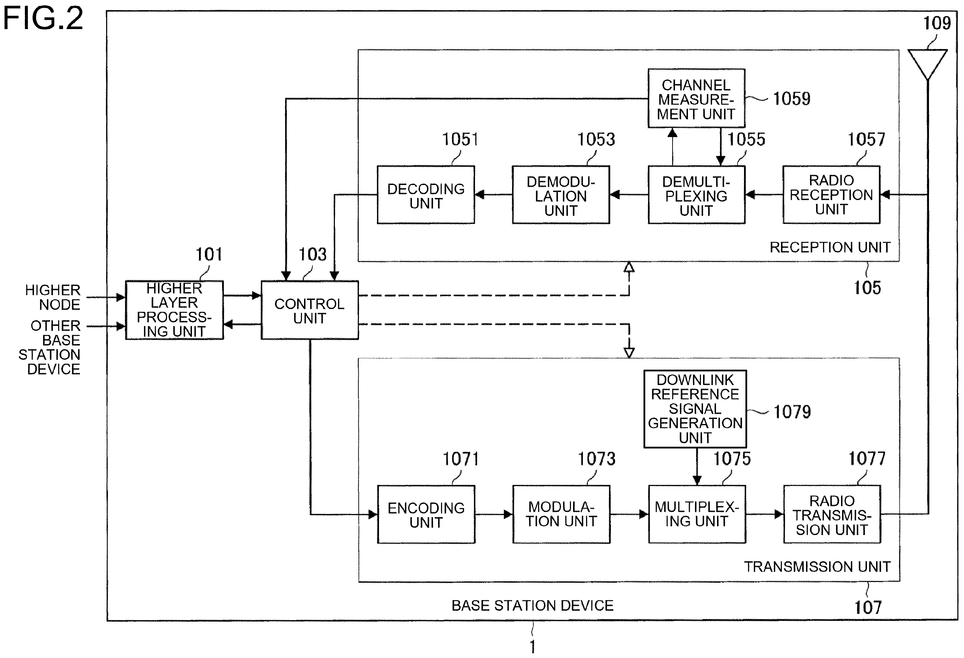

FIG. 2 is a schematic block diagram illustrating a configuration of the base station device 1 according to the present embodiment. As illustrated in the figure, the base station device 1 includes a higher layer processing unit 101, a control unit 103, a reception unit 105, a transmission unit 107, and a transmission/reception antenna 109. Furthermore, the reception unit 105 includes a decoding unit 1051, a demodulation unit 1053, a demultiplexing unit 1055, a radio reception unit 1057, and a channel measurement unit 1059. Furthermore, the transmission unit 107 includes an encoding unit 1071, a modulation unit 1073, a multiplexing unit 1075, a radio transmission unit 1077, and a downlink reference signal generation unit 1079.

As described above, the base station device 1 can support one or more RATs. Some or all of the units included in the base station device 1 illustrated in FIG. 2 can be individually configured according to the RAT. For example, the reception unit 105 and the transmission unit 107 are individually configured depending on LTE or NR. Furthermore, in an NR cell, some or all of the components included in the base station device 1 illustrated in FIG. 2 can be individually configured according to the parameter set related to the transmission signal. For example, in a certain NR cell, the radio reception unit 1057 and the radio transmission unit 1077 can be individually configured according to a parameter set related to the transmission signal.

The higher layer processing unit 101 performs processes regarding a medium access control (MAC) layer, a packet data convergence protocol (PDCP) layer, a radio link control (RLC) layer, and a radio resource control (RRC) layer. In addition, the higher layer processing unit 101 generates control information in order to control the reception unit 105 and the transmission unit 107, and then outputs the generated control information to the control unit 103.

The control unit 103 controls the reception unit 105 and the transmission unit 107 based on the control information output from the higher layer processing unit 101. The control unit 103 generates control information for the higher layer processing unit 101, and then outputs the generated control information to the higher layer processing unit 101. The control unit 103 inputs the decoded signal from the decoding unit 1051 and the channel estimation result from the channel measurement unit 1059. The control unit 103 outputs a signal to be encoded to the encoding unit 1071. Furthermore, the control unit 103 is used to control the entire or part of the base station device 1.

The higher layer processing unit 101 performs processes and management related to RAT control, radio resource control, subframe setting, scheduling control, and/or CSI report control. The processes and management in the higher layer processing unit 101 are performed individually for each of the terminal devices, or commonly for terminal devices connected to the base station device. The processing and management in the higher layer processing unit 101 may be performed only by the higher layer processing unit 101 or may be acquired from a higher node or another base station device. Furthermore, the processes and management in the higher layer processing unit 101 may be individually performed according to the RAT. For example, the higher layer processing unit 101 performs processes and management in LTE and processes and management in NR individually.

The RAT control in the higher layer processing unit 101 includes execution of management related to the RAT. For example, the RAT control includes execution of management related to LTE and/or management related to NR. Management related to NR includes setting and processes regarding a parameter set related to a transmission signal in an NR cell.

The radio resource control in the higher layer processing unit 101 includes generation and/or management of downlink data (transport block), system information, an RRC message (RRC parameter), and/or a MAC control element (CE) .

The subframe setting in the higher layer processing unit 101 includes management of subframe setting, subframe pattern setting, uplink-downlink setting, uplink reference UL-DL setting, and/or downlink reference UL-DL setting. The subframe setting in the higher layer processing unit 101 is also referred to as base station subframe setting. In addition, the subframe setting in the higher layer processing unit 101 can be determined based on the uplink traffic volume and the downlink traffic volume. Furthermore, the subframe setting in the higher layer processing unit 101 can be determined based on a scheduling result of scheduling control in the higher layer processing unit 101.

The scheduling control in the higher layer processing unit 101 includes determination of the frequency and the subframe to which the physical channel is allocated, the coding rate, the modulation scheme, the transmission power, or the like of the physical channel based on received channel state information, an estimation value of the propagation path, the quality of the channel or the like input from the channel measurement unit 1059. For example, the control unit 103 generates control information (DCI format) based on a scheduling result of scheduling control in the higher layer processing unit 101.

The CSI report control in the higher layer processing unit 101 controls the CSI report of the terminal device 2. For example, the setting related to a CSI reference resource to be assumed for calculating CSI in the terminal device 2 is controlled.

Under the control of the control unit 103, the reception unit 105 receives a signal transmitted from the terminal device 2 via the transmission/reception antenna 109, further performs the reception process such as separation, demodulation, and decoding, and then outputs information that has undergone the reception process to the control unit 103. Incidentally, the reception process in the reception unit 105 is performed based on a setting defined in advance or a setting of which the base station device 1 notifies the terminal device 2.

The radio reception unit 1057 performs processes onto the uplink signal received via the transmission/reception antenna 109, such as conversion (down conversion) into an intermediate frequency, removal of an unnecessary frequency component, control of an amplification level so that a signal level is appropriately maintained, quadrature demodulation based on an in-phase component and a quadrature component of a received signal, conversion from an analog signal into a digital signal, removal of a guard interval (GI), and/or extraction of a frequency domain signal by fast Fourier transform (FFT).

The demultiplexing unit 1055 demultiplexes an uplink channel such as a PUCCH or a PUSCH and/or an uplink reference signal from a signal input from the radio reception unit 1057. The demultiplexing unit 1055 outputs the uplink reference signal to the channel measurement unit 1059. The demultiplexing unit 1055 compensates the propagation path for the uplink channel based on the estimation value of the propagation path input from the channel measurement unit 1059.

The demodulation unit 1053 demodulates the received signal using a modulation scheme such as binary phase shift keying (BPSK), quadrature phase shift keying (QPSK), 16 quadrature amplitude modulation (16QAM), 64QAM, or 256QAM onto the modulation symbol of the uplink channel. The demodulation unit 1053 performs separation and demodulation of the MIMO multiplexed uplink channel.

The decoding unit 1051 performs a decoding process on the coded bits of the demodulated uplink channel. The decoded uplink data and/or uplink control information are output to the control unit 103. The decoding unit 1051 performs a decoding process on the PUSCH for each of transport blocks.

The channel measurement unit 1059 measures the estimation value of the propagation path and/or the channel quality based on the uplink reference signal input from the demultiplexing unit 1055, and then outputs measurement results to the demultiplexing unit 1055 and/or the control unit 103. For example, the channel measurement unit 1059 measures an estimation value of a propagation path for performing propagation path compensation on the PUCCH or the PUSCH by using the UL-DMRS, and measures the channel quality in the uplink by using SRS.

Under the control of the control unit 103, the transmission unit 107 performs transmission processes such as encoding, modulation, and multiplexing on the downlink control information and the downlink data input from the higher layer processing unit 101. For example, the transmission unit 107 generates and multiplexes a PHICH, a PDCCH, an EPDCCH, a PDSCH, and a downlink reference signal to generate a transmission signal. Note that the transmission processes in the transmission unit 107 are performed based on a setting defined in advance, a setting of which the base station device 1 notifies the terminal device 2, or a setting notification of which is provided through the PDCCH or the EPDCCH transmitted in the same subframe.

The encoding unit 1071 encodes the HARQ indicator (HARQ-ACK, ACK/NACK), the downlink control information, and the downlink data input from the control unit 103 by using a predetermined encoding scheme such as block encoding, convolutional encoding, and turbo encoding. The modulation unit 1073 modulates the coded bits input from the encoding unit 1071 by a predetermined modulation scheme such as BPSK, QPSK, 16QAM, 64QAM, or 256QAM. The downlink reference signal generation unit 1079 generates a downlink reference signal based on a physical cell identification (PCI), an RRC parameter set in the terminal device 2, or the like. The multiplexing unit 1075 multiplexes the modulation symbol of each of channels and the downlink reference signal and allocates the multiplexed signals on a predetermined resource element.

The radio transmission unit 1077 performs processes, on the signal from the multiplexing unit 1075, such as conversion into a signal in a time domain by inverse fast Fourier transform (IFFT), addition of a guard interval, generation of a baseband digital signal, conversion into an analog signal, quadrature modulation, conversion from an intermediate frequency signal to a high frequency signal (up-conversion), removal of an unnecessary frequency component, and amplification of power, so as to generate a transmission signal. The transmission signal output from the radio transmission unit 1077 is transmitted from the transmission/reception antenna 109.

### <Configuration Example of Terminal Device in Present Embodiment>

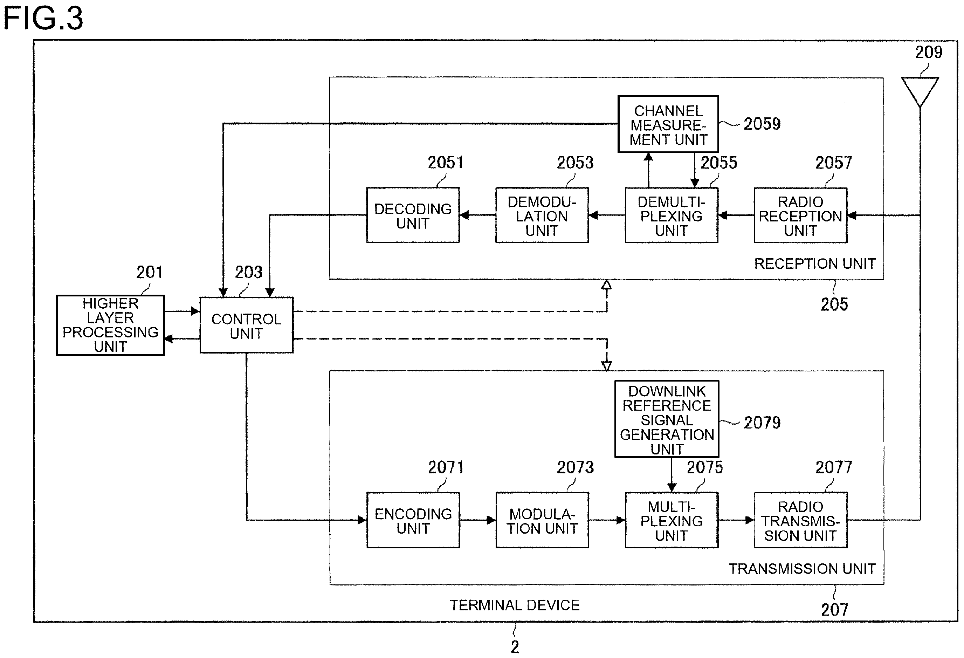

FIG. 3 is a schematic block diagram illustrating a configuration of the terminal device 2 of the present embodiment. As in the figure, the terminal device 2 includes a higher layer processing unit 201, a control unit 203, a reception unit 205, a transmission unit 207, and a transmission/reception antenna 209. Furthermore, the reception unit 205 includes a decoding unit 2051, a demodulation unit 2053, a demultiplexing unit 2055, a radio reception unit 2057, and a channel measurement unit 2059. Furthermore, the transmission unit 207 includes an encoding unit 2071, a modulation unit 2073, a multiplexing unit 2075, a radio transmission unit 2077, and an uplink reference signal generation unit 2079.

As described above, the terminal device 2 can support one or more RATs. Some or all of the units included in the terminal device 2 illustrated in FIG. 3 can be individually configured according to the RAT. For example, the reception unit 205 and the transmission unit 207 are individually configured depending on LTE or NR. Furthermore, in an NR cell, some or all of the components included in the terminal device 2 illustrated in FIG. 3 can be individually configured according to the parameter set related to the transmission signal. For example, in a certain NR cell, the radio reception unit 2057 and the radio transmission unit 2077 can be individually configured according to a parameter set related to a transmission signal.

The higher layer processing unit 201 outputs the uplink data (transport block) to the control unit 203. The higher layer processing unit 201 performs processes of a medium access control (MAC) layer, a packet data convergence protocol (PDCP) layer, a radio link control (RLC) layer, and a radio resource control (RRC) layer. In addition, the higher layer processing unit 201 generates control information in order to control the reception unit 205 and the transmission unit 207, and outputs the generated control information to the control unit 203.

The control unit 203 controls the reception unit 205 and the transmission unit 207 based on the control information output from the higher layer processing unit 201. The control unit 203 generates control information for the higher layer processing unit 201 and outputs the generated control information to the higher layer processing unit 201. The control unit 203 inputs the decoded signal from the decoding unit 2051 and the channel estimation result from the channel measurement unit 2059. The control unit 203 outputs a signal to be encoded to the encoding unit 2071. Furthermore, the control unit 203 may be used to control the entire or part of the terminal device 2.

The higher layer processing unit 201 performs processes and management related to RAT control, radio resource control, subframe setting, scheduling control, and/or CSI report control. The processes and management in the higher layer processing unit 201 are performed based on the setting defined in advance and/or setting based on control information set or provided in notification from the base station device 1. For example, the control information from the base station device 1 includes an RRC parameter, a MAC control element, or DCI. Furthermore, the processes and management in the higher layer processing unit 201 may be individually performed according to the RAT. For example, the higher layer processing unit 201 performs processes and management in LTE and processes and management in NR individually.

The RAT control in the higher layer processing unit 201 includes management related to the RAT. For example, the RAT control includes execution of management related to LTE and/or management related to NR. Management related to NR includes setting and processes regarding a parameter set related to a transmission signal in an NR cell.

The radio resource control in the higher layer processing unit 201 includes management of setting information in the own device. The radio resource control in the higher layer processing unit 201 includes generation and/or management of uplink data (transport block), system information, an RRC message (RRC parameter), and/or a MAC control element (CE).

The subframe setting in the higher layer processing unit 201 includes management of subframe setting in the base station device 1 and/or a base station device different from the base station device 1. The subframe setting includes an uplink or downlink setting for the subframe, a subframe pattern setting, an uplink-downlink setting, an uplink reference UL-DL setting, and/or a downlink reference UL-DL setting. The subframe setting in the higher layer processing unit 201 is also referred to as terminal subframe setting.

The scheduling control in the higher layer processing unit 201 includes generation of control information for performing control related to scheduling for the reception unit 205 and the transmission unit 207 based on the DCI (scheduling information) from the base station device 1.

The CSI report control in the higher layer processing unit 201 includes control related to reporting of CSI to the base station device 1. For example, the CSI report control includes control of the setting regarding the CSI reference resource to be assumed for calculating CSI in the channel measurement unit 2059. The CSI reporting control controls a resource (timing) used for reporting CSI based on DCI and/or the RRC parameter.

Under the control of the control unit 203, the reception unit 205 receives a signal transmitted from the base station device 1 via the transmission/reception antenna 209, further performs the reception process such as separation, demodulation, and decoding, and then outputs information that has undergone the reception process to the control unit 203. Incidentally, the reception process in the reception unit 205 is performed based on a setting defined in advance or the notification or the setting from the base station device 1.

The radio reception unit 2057 performs processes onto the uplink signal received via the transmission/reception antenna 209, such as conversion (down conversion) into an intermediate frequency, removal of an unnecessary frequency component, control of an amplification level so that a signal level is appropriately maintained, quadrature demodulation based on an in-phase component and a quadrature component of a received signal, conversion from an analog signal into a digital signal, removal of a guard interval (GI), and/or extraction of a frequency domain signal by fast Fourier transform (FFT).

The demultiplexing unit 2055 demultiplexes a downlink channel such as a PHICH, a PDCCH, an EPDCCH, or a PDSCH, a downlink synchronization signal, and/or a downlink reference signal, from the signal input from the radio reception unit 2057. The demultiplexing unit 2055 outputs the downlink reference signal to the channel measurement unit 2059. The demultiplexing unit 2055 compensates the propagation path for the downlink channel based on the estimation value of the propagation path input from the channel measurement unit 2059.

The demodulation unit 2053 demodulates the received signal using a modulation scheme such as BPSK, QPSK, 16QAM, 64QAM, or 256QAM onto the modulation symbol of the downlink channel. The demodulation unit 2053 performs separation and demodulation of the MIMO multiplexed downlink channel.

The decoding unit 2051 performs a decoding process on the coded bits of the demodulated downlink channel. The decoded downlink data and/or downlink control information are output to the control unit 203. The decoding unit 2051 performs a decoding process on the PDSCH for each of transport blocks.

The channel measurement unit 2059 measures the estimation value of the propagation path and/or the channel quality based on the downlink reference signal input from the demultiplexing unit 2055, and then outputs measurement results to the demultiplexing unit 2055 and/or the control unit 203. The downlink reference signal used for measurement by the channel measurement unit 2059 may be determined based on at least the transmission mode set by the RRC parameter and/or other RRC parameters. For example, the DL-DMRS measures an estimation value of a propagation path for performing propagation path compensation for the PDSCH or the EPDCCH. The CRS measures an estimation value of a propagation path for performing propagation path compensation on the PDCCH or the PDSCH, and/or measures a channel in the downlink for reporting CSI. The CSI-RS measures a channel in downlink for reporting CSI. The channel measurement unit 2059 calculates reference signal received power (RSRP) and/or reference signal received quality (RSRQ) based on the CRS, the CSI-RS, or the detection signal, and then outputs calculation results to the higher layer processing unit 201.

Under the control of the control unit 203, the transmission unit 207 performs transmission processes such as encoding, modulation, and multiplexing on the uplink control information and the uplink data input from the higher layer processing unit 201. For example, the transmission unit 207 generates and multiplexes an uplink channel such as a PUSCH or a PUCCH and/or an uplink reference signal so as to generate a transmission signal. Incidentally, the transmission process in the transmission unit 207 is performed based on a setting defined in advance or the notification or the setting from the base station device 1.

The encoding unit 2071 encodes the HARQ indicator (HARQ-ACK, ACK/NACK), the uplink control information, and the uplink data input from the control unit 203 by using a predetermined encoding scheme such as block encoding, convolutional encoding, and turbo encoding. The modulation unit 2073 modulates the coded bits input from the encoding unit 2071 by a predetermined modulation scheme such as BPSK, QPSK, 16QAM, 64QAM, or 256QAM. The uplink reference signal generation unit 2079 generates the uplink reference signal based on the RRC parameter or the like set in the terminal device 2. The multiplexing unit 2075 multiplexes the modulation symbol of each of channels and the uplink reference signal and allocates the multiplexed signals on a predetermined resource element.

The radio transmission unit 2077 performs processes, on the signal from the multiplexing unit 2075, such as conversion into a signal in a time domain by inverse fast Fourier transform (IFFT), addition of a guard interval, generation of a baseband digital signal, conversion into an analog signal, quadrature modulation, conversion from an intermediate frequency signal to a high frequency signal (up-conversion), removal of an unnecessary frequency component, and amplification of power, so as to generate a transmission signal. The transmission signal output from the radio transmission unit 2077 is transmitted from the transmission/reception antenna 209.

### <Details of Sidelink of LTE in Present Embodiment>

In LTE, sidelink communication is performed. The sidelink communication is direct communication between a terminal device and a terminal device different from the terminal device. For the sidelink, candidates of time and frequency resources to be used for sidelink transmission/reception, referred to as resource pools, are set onto the terminal device. Resources for sidelink transmission/reception are selected from the resource pools, and then sidelink communication is performed. Since the sidelink communication is performed using uplink resources (uplink subframe or uplink component carrier), the resource pools are also set for the uplink subframe or the uplink component carrier.

The sidelink physical channel includes a PSCCH, a PSSCH, a sidelink ACK/NACK channel, or the like.

The PSCCH is used to transmit sidelink control information (SCI). The mapping of the information bits of the sidelink control information is defined as an SCI format. The sidelink control information includes a sidelink grant. The sidelink grant is used for scheduling a PSSCH.

The PSSCH is used to transmit sidelink data (also referred to as sidelink shared channel (SLL-SCH)). The PSSCH may also be used to transmit higher layer control information.

The sidelink ACK/NACK channel is used to reply ACK/NACK to the PSSCH decoding result to the transmitting terminal device.

The resource pool is set from the base station device onto the terminal device by using SIB or a dedicated RRC message. Alternatively, the resource pool is set by information regarding a resource pool preset to the terminal device. The time resource pool is indicated by period information, offset information, and subframe bitmap information. The frequency resource pool is indicated by a resource block start position, a resource block end position, and the number of consecutive resource blocks.

### <Details of NR sidelink in present embodiment>

Details of sidelink resource pool allocation in NR will be described below.

In the sidelink communication within the cell coverage, it is possible to dynamically set the sidelink resource pools in NR. The resource pool for the sidelink in NR is indicated by an NR-PDCCH from the base station. That is, NR-DCI included in the NR-PDCCH indicates a resource block and a subframe used for transmission/reception of an NR-PSCCH, an NR-PSSCH, and the sidelink ACK/NACK channel.

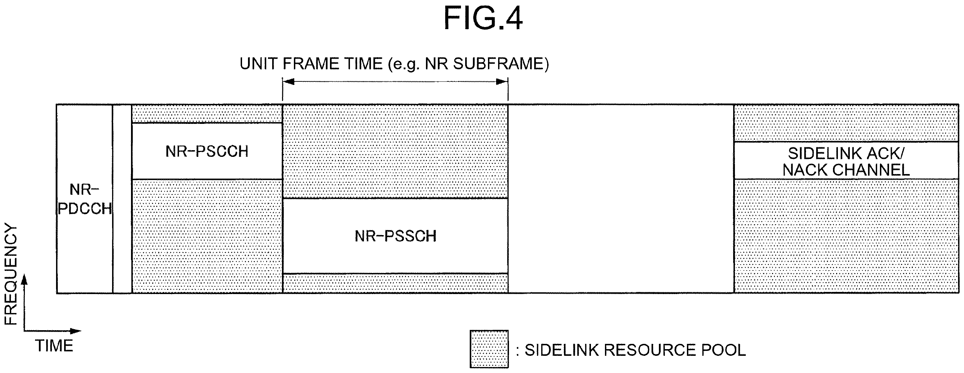

FIG. 4 is a diagram illustrating an example of sidelink dynamic resource pool allocation. The first terminal device sets, by the NR-PDCCH, subsequent three subframes including a subframe in which the NR-PDCCH is transmitted, as a resource pool for sidelink communication. After waiting for the lapse of the gap time for the reception/transmission switching and the generation processes of the NR-PSCCH and the NR-PSSCH, the first terminal device transmits the NR-PSCCH to the second terminal device using the resource pool designated by the NR-PDCCH. Furthermore, the first terminal device transmits the NR-PSSCH scheduled according to the NR-SCI format included in the NR-PSCCH to the second terminal device using the resource pool designated by the NR-PDCCH. Finally, after waiting for the lapse of the gap time for the sidelink ACK/NACK channel generation process, the second terminal device transmits the information regarding the ACK/NACK response to the NR-PSSCH transmitted from the first terminal device, to the first terminal device via the sidelink ACK/NACK channel by using the resource pool designated by the NR-PDCCH.

As an example of the indication of the time resource pool by the NR-PDCCH, when DCI indicating sidelink communication is included in the NR-PDCCH, the time resource used for the sidelink communication will be indicated as a resource pool of the sidelink starting from the NR-PDCCH up to a predetermined subframe. The first terminal device recognizes the time resource pool from the subframe by which the DCI indicating the sidelink communication has been received. The predetermined subframe may be preliminarily set to three subframes, for example, or may be set from higher layers such as SIB or a dedicated RRC message.

As an example of the indication of the time resource pool by the NR-PDCCH, regarding the time resource used for the sidelink communication, information indicating a subframe is included in the DCI indicating sidelink communication included in the NR-PDCCH, and the resource pool is indicated based on the information. The first terminal device recognizes the time resource pool from the information indicating the subframe. Examples of the method of indicating the subframe include subframe number, or the quantity of subframes from the NR-PDCCH to the time resource pool.

As an example of the indication of the frequency resource by the NR-PDCCH, the frequency resource used for sidelink communication is indicated based on resource allocation information which is one of DCI parameters indicating sidelink communication included in the NR-PDCCH. The first terminal device recognizes that the resource block indicated by the resource allocation information is a resource pool. The resource allocation information is information indicating at least a resource on which the NR-PSCCH is to be transmitted.

Note that notification of the resource allocation information may be individually provided by information indicating a resource for transmitting the NR-PSCCH, information indicating a resource for transmitting the NR-PSSCH, and information indicating a resource for transmitting the sidelink ACK/NACK channel.

Note that the resource for transmitting the NR-PSSCH and the resource for transmitting the sidelink ACK/NACK channel may be linked with information indicating the resource for transmitting the NR-PSCCH. For example, the frequency resource for transmitting the NR-PSSCH may be the same as the frequency resource for transmitting the NR-PSCCH.

Note that resource pools of a plurality of NR component carriers may be indicated from one NR-PDCCH. For example, resource pools to be used for the sidelink communication of the NR primary cell and the secondary cell may be set from the NR-PDCCH transmitted in the NR primary cell.

The subframe and the resource block in which the resource pool can be indicated by the NR-PDCCH may be limited by higher layer information. Examples of the higher layer information include terminal-specific setting information by a dedicated RRC message or broadcast information such as SIB. The higher layer information is used to set the candidates of time and frequency resource pools, and the DCI indicating sidelink communication included in the NR-PDCCH indicates, from the candidates, subframes and resource blocks that can be actually used as resource pools.

The NR-PDCCH including the information regarding the resource pools for the sidelink is preferably transmitted specifically for the terminal device or specifically for the terminal device group. That is, the NR-PDCCH containing the sidelink resource pool information is preferably arranged in the search space determined by the terminal device-specific information such as C-RNTI or arranged in the search space determined by the terminal device group-specific information.

As an example of monitoring the NR-PSCCH performed by the second terminal device, the second terminal device continuously monitors both the NR-PDCCH and the NR-PSCCH at all times. When having detected the NR-PDCCH addressed to the second terminal device, the second terminal device shifts to an uplink transmission process, a downlink reception process, or an NR-PSCCH transmission process. Otherwise, the second terminal device attempts monitoring the NR-PSCCH. In this case, candidates (NR-PSCCH candidates) of a plurality of resources in which the NR-PSCCH is likely to be transmitted to the second terminal device are set from the higher layer or set in advance. The second terminal device attempts blind decoding of the NR-PSCCH in the set NR-PSCCH candidates. When the second terminal device is in the RRC connected state with the base station device, notification of the setting information regarding the NR-PSCCH candidate is provided to the second terminal device by a dedicated RRC message. When the second terminal device is not in the RRC connected state with the base station device, the setting information regarding the NR-PSCCH candidate is reported to the second terminal device by an NR sidelink broadcast channel (NR-PSBCH) transmitted by the first terminal device. The setting information included in the NR-PSBCH is information set from the base station device when the first terminal device exists inside the cell, while it is information set in advance when the first terminal device exists outside the cell.

Note that the resource pool used for transmission of the NR-PSBCH may also be indicated by the NR-PDCCH. The method of indicating the resource pool used for transmission of the NR-PSBCH may also be similar to the method of indicating the resource pool used for transmission of the NR-PSCCH.

As another example of monitoring the NR-PSCCH of the second terminal device, when the second terminal device exists inside the cell, the second terminal device can receive the NR-PDCCH for which the resource pool is designated. When having received the NR-PDCCH, the second terminal device attempts to decode the NR-PSCCH in the resource used for transmission of the NR-PSCCH, based on the resource pool information included in the NR-PDCCH. Otherwise, the second terminal device suspends the monitoring process until the next unit frame. This eliminates the necessity to perform an operation of attempting to decode the NR-PSCCH a plurality of times in one unit frame, making it possible to achieve effects such as low power consumption of the terminal device and simplification of a receiver.

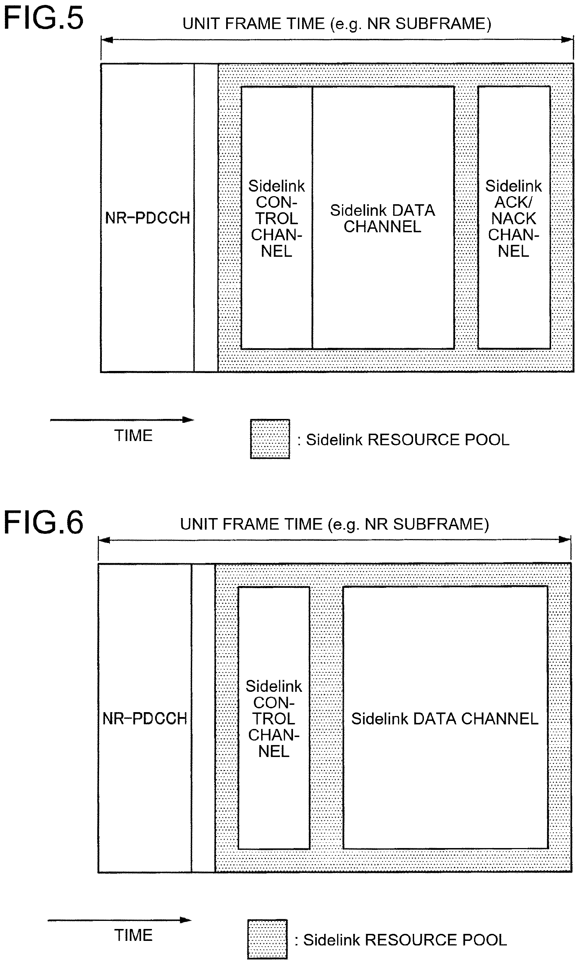

FIG. 5 is a diagram illustrating an example of sidelink dynamic resource pool allocation. As a difference from FIG. 4, when the self-contained transmission is also possible in the sidelink communication, it is possible to complete the transmission/reception of the NR-PSCCH, the NR-PSSCH, and the sidelink ACK/NACK channel by the sidelink transmission resource pool allocated within one predetermined unit of transmission/reception time (for example, a unit frame time) as illustrated in FIG. 5. After receiving the NR-PDCCH, the first terminal device recognizes the resource pool for the sidelink based on the DCI (first sidelink DCI) indicating the sidelink communication, included in the NR-PDCCH. The first terminal device then transmits the NR-PSCCH and the NR-PSSCH using the resource pool of the sidelink indicated from the first sidelink DCI. After receiving the NR-PSCCH transmitted from the first terminal device, the second terminal device attempts to decode the NR-PSSCH based on the information included in the NR-PSCCH.

The first terminal device can determine the channel length of the NR-PSSCH based on the information regarding the time resource for the sidelink included in the first sidelink DCI. Alternatively, the first terminal device can recognize the time resource for the sidelink included in the NR-PDCCH based on the information regarding the channel length of the NR-PSSCH included in the first sidelink DCI.

This enables self-contained transmission to be performed also in sidelink communication, leading to an increased resource utilization efficiency of the system with flexible resource control.

FIG. 6 is a diagram illustrating an example of sidelink dynamic resource pool allocation. As a difference from FIG. 5, the first terminal device indicates, to the second terminal device by using the NR-PSCCH, scheduling information regarding NR-PSSCH transmission from the second terminal device. The second terminal device waits for the lapse of the gap time for the reception process of the NR-PSCCH and the transmission process of the NR-PSSCH, and then transmits the NR-PSSCH based on the information indicated from the NR-PSSCH. With this configuration, even when the second terminal device exists outside the cell, in particular, the base station device can dynamically control the resource for the sidelink communication used by the second terminal device via the first terminal device, leading to improved resource use efficiency in the system.

The DCI (second sidelink DCI) indicating the sidelink communication included in the NR-PSCCH transmitted in FIG. 6 is different from the first sidelink DCI indicating the sidelink communication included in the NR-PSCCH transmitted in FIG. 5. The DCI indicating the sidelink communication included in the NR-PSCCH transmitted in FIG. 5 is DCI used for scheduling the resource for the transmission of the NR-PSCCH and the NR-PSSCH by the first terminal device to the second terminal device, whereas the DCI indicating the sidelink communication included in the NR-PSCCH transmitted in FIG. 6 is DCI used for scheduling the resource for the transmission of the NR-PSCCH by the first terminal device to the second terminal device and scheduling the resource for transmission of the NR-PSSCH scheduled by the NR-PSCCH from the second terminal device to the first terminal device.

In addition, the SCI (first SCI) included in the NR-PSCCH transmitted in FIG. 5 is different from the SCI (second SCI) included in the NR-PSCCH transmitted in FIG. 6. The first SCI is used to indicate, to the second terminal device, reception of the NR-PSSCH transmitted from the first terminal device, while the second SCI is used to indicate, to the second terminal device, transmission of the NR-PSSCH addressed to the first terminal device.

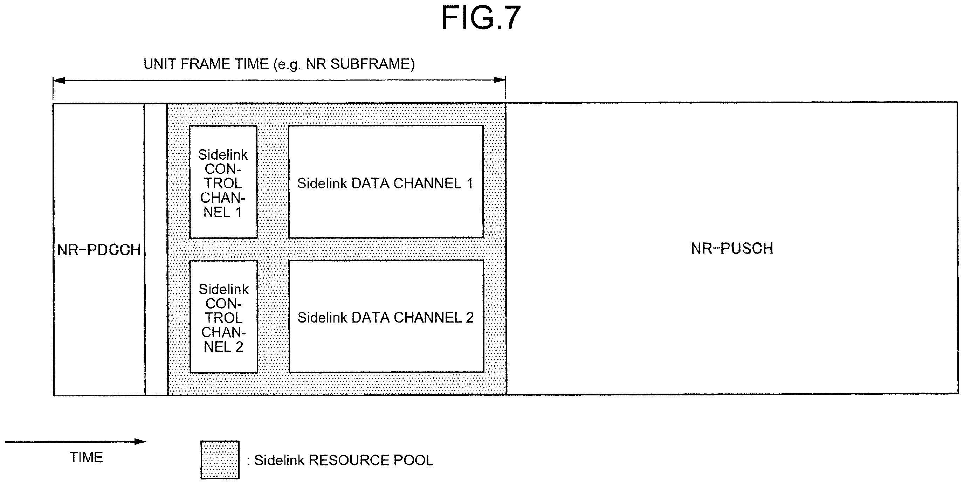

FIG. 7 is a diagram illustrating an example of sidelink dynamic resource pool allocation. FIG. 7 assumes execution of terminal device relay. As compared to FIG. 6, FIG. 7 is a case of performing, by the NR-PDCCH, scheduling of the NR-PUSCH in addition to the indication of the resource pool for the sidelink. Similarly to FIG. 6, using the NR-PSCCH, the first terminal device indicates, to the second terminal device, transmission of the NR-PSSCH, and then receives SL-SCH from the second terminal device. The first terminal device then transmits the NR-PUSCH to the base station device, with the received the SL-SCH included in the NR-PUSCH. This enables scheduling of the resource pool of the sidelink and the NR-PUSCH by one NR-PDCCH, making it possible to implement low-latency terminal device relay with reduced overhead due to the NR-PDCCH.

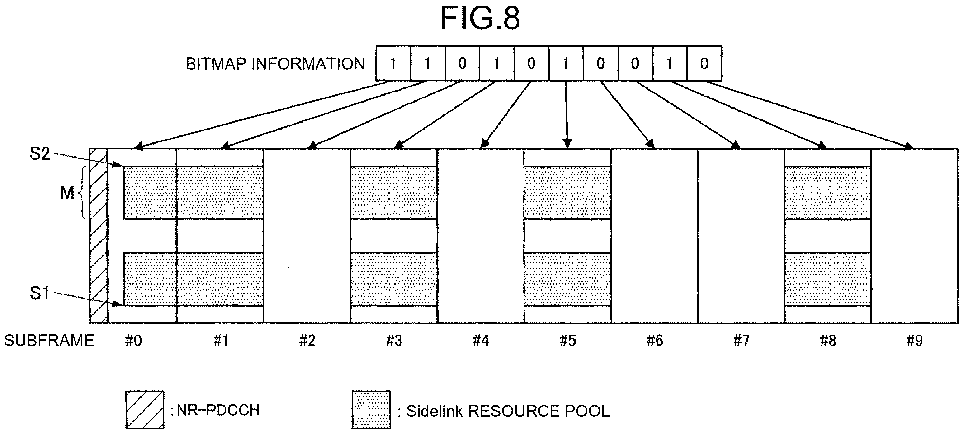

FIG. 8 is a diagram illustrating an example of sidelink dynamic resource pool allocation. FIG. 8 illustrates indication of the resource pool for the sidelink in units of radio frames by the NR-PDCCH. The NR-PDCCH is transmitted using subframe #0.

The information regarding the resource pool for the sidelink included in the NR-PDCCH is indicated by bitmap information represented by using 1 or 0 to indicate a subframe in which the resource pool of the sidelink is set, a resource block start position S1, a resource block end position S2, and number M of consecutive resource blocks.

The NR-PDCCH including the resource pool information regarding the sidelink is preferably transmitted to be in common to terminals. That is, the NR-PDCCH including the resource pool information of the sidelink is preferably arranged in a search space common to the terminal devices.

When the terminal device has received the NR-PDCCH including the resource pool information regarding the sidelink in subframe #0, the resource pool is set using the resource pool information across the radio frames in which the NR-PDCCH has been received. On the other hand, when the terminal device has received the NR-PDCCH including the resource pool information regarding the sidelink in subframe # 0, the terminal device assumes that the resource pool is not set across the radio frames.

### <<2. Technical Problems>>

Next, technical problems of the communication system according to an embodiment of the present disclosure will be described by specifically focusing on a case of implementing inter-device communication (for example, V2X communication represented by D2D and V2V, or the like) via the NR sidelink.

In conventional D2D and V2X, broadcast communication is supported for the purpose of supporting a minimum necessary use case. In contrast, in NR V2X, in addition to the use case of LTE V2X, use cases with higher requirements such as vehicles platooning, sensor sharing, remote driving, or the like are supported. Therefore, in order to support such use cases with higher requirements, support for unicast communication and groupcast (multicast) communication has been examined in addition to support for broadcast communication.

Even in conventional D2D, it is possible to implement groupcast communication at a higher layer level (for example, a level of the TCP layer or the application layer). Specifically, the terminal device on the transmission side transmits data to surrounding terminal devices (that is, the terminal device on the reception side) by broadcasting, and the terminal device on the reception side processes or discards the data based on the destination information included in the higher layer. Since broadcast communication has been used in the conventional multicast communication scheme, there has been a difficulty in performing appropriate communication control onto terminal devices belonging to a group, which has not been efficient in some cases.

In order to implement highly efficient unicast communication and groupcast communication, introducing a technology of providing feedback of a response according to data reception results, such as HARQ, to a transmission-side device can be an effective means. Application of HARQ enables the terminal device on the transmission side to retransmit data according to the success or failure of data combining in the terminal device on the reception side, enabling the terminal device on the reception side to perform soft combining of the transmitted data. In addition, feedback of the ACK/NACK enables the terminal device on the transmission side to grasp the state of the reception quality of the terminal device on the reception side, making it possible to implement unicast or groupcast link adaptation. Specifically, when ACK is returned, the terminal device on the transmission side can determine that a sufficient reception SINR has been ensured for the MCS used for transmission, enabling the use of a high MCS in the next transmission. Moreover, when NACK is returned, the terminal device on the transmission side can determine that a sufficient reception SINR has not been ensured for the MCS used for transmission, enabling the use of a low MCS in the next transmission. With the above control, it is possible to implement good sidelink communication.

On the other hand, in order to apply the HARQ to the inter-device communication between the terminal devices via the sidelink, it is necessary to ensure a resource to allow implementation of feedback of the HARQ from the terminal device on the reception side to the terminal device on the transmission side.

In view of the above circumstances, the present disclosure proposes a technology capable of implementing feedback of a response according to the data reception results in a more preferable manner in inter-device communication (V2X communications represented by D2D and V2V, for example) between terminal devices. Specifically, the present disclosure proposes a technology that makes it possible to apply HARQ in a more preferable manner to inter-device communication (NR V2X, for example) between terminal devices for which application of NR is assumed.

### <<3. Technical Features>>

Hereinafter, technical features of a system according to an embodiment of the present disclosure will be described focusing on a technology related to implementation of HARQ in inter-device communication between terminal devices via a sidelink, represented by NR V2X.

In inter-device communication between terminal devices via the sidelink, the terminal device on the transmission side acquires, in addition to the PSCCH and the PSSCH, resources usable by the terminal device on the reception side as a sidelink ACK/NACK channel or a HARQ feedback channel. Note that, in the present disclosure, a channel usable for transmission of a response via the sidelink, such as a sidelink ACK/NACK channel and a HARQ feedback channel, is also referred to as a "Physical Sidelink Feedback Channel (PSFCH)" for convenience. Furthermore, hereinafter, for convenience, the terminal device on the transmission side is also referred to as a "transmitting terminal", and the terminal device on the reception side is also referred to as a "receiving terminal". That is, in inter-device communication between terminal devices, a receiving terminal may correspond to an example of "another (or the other) terminal device" when viewed from the transmitting terminal, while a transmitting terminal may correspond to an example of "another (or the other) terminal device" when viewed from the receiving terminal. Implementation of such a mechanism enables the transmitting terminal to recognize the PSFCH resource in advance, for example, making it possible to adjust the reception timing of the PSFCH and reduce the load on the blind decoding of the PFSCH. This also makes it possible, in the groupcast, to facilitate adjustment of scheduling of the PSFCH resources to be used by a plurality of receiving terminals.

PSFCH has two types, namely, "Short PSFCH" and "Long PSFCH". The short PSFCH has a length of two symbols or less. In contrast, the long PSFCH has a length of three symbols or more and 14 symbols or less.

### (Arrangement Method of Resources Usable for HARQ Feedback)

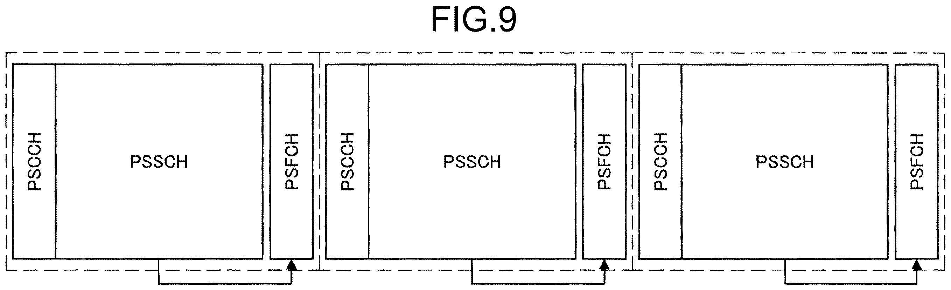

Here, an example of a method of arranging resources (that is, the PSFCH resource) usable for HARQ feedback will be described below. First, an example of a method of arranging resources usable for HARQ feedback will be described focusing on a case where the short PSFCH is used for HARQ feedback from the reception side to the transmission side in inter-device communication. For example, FIGS. 9 to 11 are explanatory diagrams for describing an overview of an example of a method of arranging resources usable for HARQ. The examples illustrated in FIGS. 9 to 11 will be individually described below.

First, an example illustrated in FIG. 9 will be described. FIG. 9 illustrates an example of a method of arranging the PSFCH assuming self-contained feedback. That is, FIG. 9 illustrates an example of a method of arranging one PSFCH when one PSSCH is associated with one PSFCH. In a case where self-contained feedback is performed, for example, as illustrated in FIG. 9, a HARQ resource (in other words, the PSFCH resource) is allocated to a predetermined number of symbols (for example, one symbol behind) on the rear side of the slot used for transmission of the PSSCH.

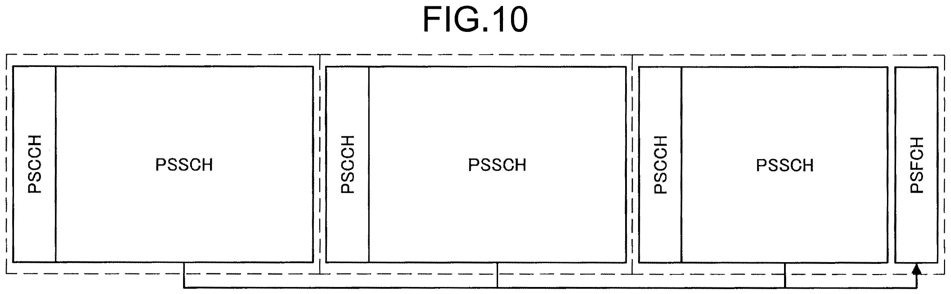

Next, an example illustrated in FIG. 10 will be described. FIG. 10 illustrates an example of a method of arranging the PSFCH assuming HARQ bundling across the same links (between the same transmission/reception sections). That is, FIG. 10 illustrates an example of a method of arranging one PSFCH when one PSFCH is associated with a plurality of PSSCHs. In a case where HARQ bundling is performed between the same link, one PSFCH can be associated with a plurality of PSSCHs arranged in different slots, as illustrated in FIG. 10, for example.

On the other hand, in the example illustrated in FIG. 10, due to the characteristic that one PSFCH can be associated with a plurality of PSSCHs arranged in different slots, there is a possibility of missing the PSCCH. Therefore, in order to avoid missing the PSSCH, it is desirable to introduce a mechanism corresponding to a downlink assignment index (DAI) in LTE. The DAI is an index for providing notification of the count of current PSSCH transmission when the PSSCH is transmitted a plurality of times (in other words, transmission is performed in a plurality of slots.). Note that, in the present disclosure, a mechanism corresponding to the above-described DAI applied to inter-device communication between terminal devices via a sidelink, represented by NR V2X, is also referred to as a "sidelink assignment index (SAI)" for convenience. That is, by using the SAI, when a part of the PSCCH and the PSSCH has been missed, the receiving terminal can specify the PSCCH and the PSSCH and transmit NACK for the PSCCH and the PSSCH to the transmitting terminal.

Furthermore, it is possible to apply repetition transmission in inter-device communication via the sidelink. Accordingly, an example of a relationship between repetition transmission and SAI will be described below. When the condition that the same SAI and the same HARQ ID (HARQ process ID) are used is satisfied across the PSCCHs arranged in a plurality of mutually different slots, the receiving terminal can recognize that the PSSCH repetition has been applied to the plurality of slots. In other words, when the SAI or the HARQ ID is different across the PSCCHs arranged in the plurality of mutually different slots, the receiving terminal can recognize that the data transmitted in each of the plurality of slots is different from each other. With this configuration, the terminal device can dynamically perform repetition control (notification of application/non-application of repetition) with a small volume of control information.

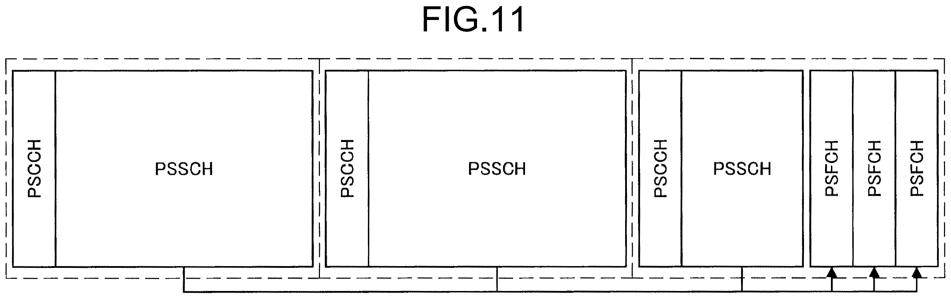

Next, an example illustrated in FIG. 11 will be described. FIG. 11 illustrates an example of a method of arranging the PSFCH assuming HARQ bundling between different links (between different transmitting terminals or between different receiving terminals). That is, FIG. 11 illustrates an example of a method of arranging a plurality of PSFCHs when the plurality of PSFCHs is associated with a plurality of PSSCHs. The example illustrated in FIG. 11 will be described separately for a case where the transmitting terminals are different and a case where the receiving terminals are different.

First, an example of a case where the transmitting terminals are different will be described. In this case, for example, the receiving terminal may return HARQ-ACK to each of the plurality of transmitting terminals in association with different resources. In other words, the receiving terminal in this case may individually return the HARQ-ACK to each of the plurality of transmitting terminals by unicast. In addition, as another example, the receiving terminal may return the HARQ-ACK for a plurality of transmitting terminals in association with one PSFCH. In other words, in this case, the receiving terminal may return the HARQ-ACK to a plurality of transmitting terminals by broadcast.

Next, an example of a case where the receiving terminals are different (that is, in a case of performing groupcast or multicast transmission) will be described. In this case, for example, each of the plurality of receiving terminals may return the HARQ-ACK using different resources. That is, in this case, a resource (PSFCH) usable for feedback is individually allocated to each of the plurality of receiving terminals. Note that this scheme is also referred to as a "feedback resource individual allocation scheme" for convenience. Furthermore, as another example, each of the plurality of receiving terminals may return the HARQ-ACK using a common resource that can be used for feedback. That is, in this case, a common resource (PSFCH) usable for feedback is allocated to a plurality of receiving terminals. Note that this scheme is also referred to as a "feedback resource sharing allocation scheme" for convenience.

Note that, as described above, it is also possible to use Long PSFCH as a resource usable for HARQ feedback. In this case, it is also possible to apply a resource allocation method similar to that when Short PSFCH is used.

### (Method of Indicating Usable Resources for HARQ Feedback)

Subsequently, an example of a method of indicating resources usable for HARQ feedback will be described.

Basically, notification of time resource information is provided as a resource usable for HARQ feedback. In this case, the arrangement pattern of the resource may be switched by the indication of the resource. Note that the time resource information may be designated in advance.

Furthermore, resources usable for HARQ feedback may be determined according to various conditions.

For example, the resource may be determined according to the urgency of the packet. As a specific example, in the case of a packet with high urgency, a PSFCH resource may be allocated to the same slot. A packet with a higher degree of urgency can correspond to a packet with a stricter latency requirement, for example. In addition, in the case of a packet with low urgency, PSFCH resources after a predetermined number of slots may be allocated.

Furthermore, as another example, the resource may be determined according to the capability of the terminal device. As a specific example, for a terminal device having a short processing time (including PSSCH decoding time or Rx/Tx switching time), a PSFCH resource may be allocated to the same slot. That is, when the receiving terminal can give feedback to the transmitting terminal in the same slot, the PSFCH resource may be allocated to the same slot. In contrast, a PSFCH resource after a predetermined number of slots may be allocated to a terminal device having a long processing time. That is, when it is difficult for the receiving terminal to give feedback to the transmitting terminal within the same slot, the PSFCH resource may be allocated to a slot after the lapse of a period longer than the processing time of the receiving terminal.

Furthermore, as another example, the resource may be determined according to the level of congestion of the frequency band used for inter-device communication. Note that the congestion in the frequency band is represented by a channel busy ratio (CBR), for example. As a specific example, it is allowable to control such that the higher the congestion of the frequency band, the shorter the time set.

Furthermore, as another example, the resource may be determined according to a channel occupancy ratio (CR) of the terminal device. As a specific example, it is allowable to control such that the higher the CR with more frequency bands retained, the shorter the time offset.

The above is merely an example of course, and does not necessarily limit functions (particularly the functionality pertaining to the determination of resources usable for HARQ feedback) provided in the system according to an embodiment of the present disclosure. That is, the resource may be determined according to conditions other than the above.

Next, an exemplary case of designating a resource usable for HARQ feedback will be described. Assumable resource designation methods include an explicit designation method and an implicit designation method. These designation methods will be individually described below.

First, an example of a designation method when a resource usable for HARQ feedback is explicitly designated will be described. In this case, for example, information regarding the resource may be associated with the bits of the PSCCH. Note that the control information such as the PSCCH, which is associated with the information regarding the PSFCH like the information regarding the resource, corresponds to an example of "first control information".

As a specific example, the resources usable for HARQ feedback may be designated by information regarding the time offset from the PSCCH to the PSFCH. In this case, for example, notification of the resources may be provided by a bit string corresponding to the time offset pattern. Note that this notification method is a notification method similar to PDSCH-to-HARQ-feedback-timing-indicator included in the DCI format 1_0,1_1. In addition, when the time offset pattern has not been set by the higher layer, a default time offset pattern may be used. Examples of the default time offset pattern include {0,1,2,3}. In addition, the time offset is represented by the number of slots, for example.

Furthermore, as another example, a PSFCH resource may be designated. For example, when a plurality of PSFCH resources has been set in a predetermined slot as in the example described with reference to FIG. 11, notification of information designating the PSFCH resource may be provided.

Furthermore, as another example, an indication related to skipping of the PSFCH in the same slot may be performed. As a specific example, notification of whether the PSFCH is to be transmitted in the same slot may be provided. That is, when notification of the transmission of the PSFCH in the same slot has been provided, the PSFCH is to be transmitted in the corresponding slot. In contrast, when notification of non-transmission of the PSFCH in the same slot has been provided, the PSFCH may be transmitted in a slot designated in advance.

Note that the above-described various conditions may be applied individually, or a combination of a plurality of conditions may be applied. Furthermore, the above-described various conditions are merely an example, and would not necessarily limit functions (particularly the functionality pertaining to the determination of resources usable for HARQ feedback) provided in the system according to an embodiment of the present disclosure. That is, resources usable for HARQ feedback may be designated by conditions other than the above.

Next, an example of a designation method when resources usable for HARQ feedback are implicitly designated will be described.

As a specific example, the PSFCH resource may be determined according to the location of the PSCCH physical resource.

Furthermore, as another example, the PSFCH resources may be determined according to the scrambling sequence of the PSCCH. In this case, for example, a scrambling sequence such as a PSCCH scramble or a CRC scramble may be associated with a PSFCH resource.

Furthermore, as another example, the PSFCH resource may be determined according to the length of PSSCH. As a specific example, when the PSSCH is instructed to overlap the PSFCH resource, the PSFCH does not have to be transmitted in the slot, and the PSFCH may be transmitted in a subsequent slot. For the subsequent slots, for example, an offset of the slot, a slot number, or the like may be designated in advance. By such control, for example, a resource not used for PSFCH transmission can be used for PSSCH transmission, leading to high possibility of improvement in resource use efficiency.

Furthermore, as another example, by associating information regarding the resource with control information different from the information regarding the PSFCH resource included in the SCI, the resource may be determined using the control information. Examples of other control information different from the information regarding the PSFCH resource included in the SCI include a transmitting terminal ID, a receiving terminal ID, a HARQ process ID, a new data indicator (NDI), a redundancy version (RV), or the like. Specifically, when the transmitting terminal ID is used, for example, the resource may be allocated to each of the transmitting terminals. When the receiving terminal ID is used, for example, the resource may be allocated to each of the receiving terminals. Furthermore, when the HARQ process ID is used, the HARQ process ID and the information regarding the time offset may be associated with each other. In this case, for example, the HARQ process ID may indicate the time offset. As a specific example, it is allowable to control such that the PSFCH will be transmitted in the same slot when the HARQ process ID is 0 and that the PSFCH will be transmitted in the next slot when the HARQ process ID is 1.

Furthermore, as another example, the resource may be determined using control information included in other sidelink control information (SCI) different from the SCI associated with the information regarding the PSFCH resource. Examples of other SCI include an SCI for broadcast transmission, an SCI for other inter-terminal communications, and an SCI including control information different from the SCI associated with information regarding the PSFCH resource. Specifically, when it is determined from the information of other SCI that the PSFCH resource overlaps with the PSFCH resource, the PSFCH may be transmitted using a resource different from the indicated PSFCH resource. Note that the control information included in other SCI described above corresponds to an example of "second control information".

Furthermore, it is allowable to use a combination of the above-described explicit designation method and implicit designation method. Specifically, a set of possible values may vary depending on a condition, and a corresponding value may be designated by an explicit designation method or an implicit indication method.

As a more specific example, the time offset pattern may be switched between {0,1,2,3} and {4,5,6,7} depending on the urgency, and notification of the offset value may be provided by an explicit designation method or an implicit indication method. Furthermore, as another example, the pattern of the time offset may be switched between {0,1,2,3} and {4,5,6,7} according to the level of the congestion in the frequency band used for the inter-device communication, and notification of the offset value may be provided by an explicit designation method or an implicit indication method.

### (Information That Can Be Set in Addition to HARQ Feedback Resource)

Subsequently, an example of information that can be set in addition to the HARQ feedback resource will be described below.

### . Switching time

For example, when PSFCH is to be transmitted immediately after PSSCH, switching between Tx and Rx is required. The time required for switching between Tx and Rx is referred to as a switching time.

In a case where switching between Tx and Rx is required, for example, it is preferable to provide a switching gap of one or more symbols for Rx/Tx switching. The switching gap may be set in advance. For example, Rx/Tx switching may be performed using symbols that are not used for either PSSCH or PSFCH. Furthermore, in this case, a switching gap may be set for every Bandwidth Part (BWP) (or subcarrier spacing).

As another example, the switching gap may be set by RRC. In this case, for example, notification of information regarding which symbol corresponds to a switching symbol may be provided. In this case, the switching gap may be set for every BWP (or subcarrier spacing).

As another example, notification of the switching gap may be provided by the PSCCH. In this case, it is possible to apply an explicit notification method and an implicit notification method. In a case where an explicit notification method is applied, for example, it is preferable that the PSCCH provides notification of information regarding at least one of which symbol corresponds to a switching symbol, or the presence or absence of a switching gap. In addition, when the implicit notification method is applied, it is possible to use the resources other than the resources allocated by PSSCH and PSFCH, as the switching gap, for example.

Note that, when one or more symbols of switching gaps are provided, another terminal device can use the switching gap for other purposes. As a specific example, the other terminal device can transmit a detection signal to a dedicated short range communications (DSRC) device across the one or more symbols of switching gaps. As another example, the other terminal device may transmit the PSFCH across the one or more symbols of switching gaps. Furthermore, the other terminal device can receive a PSCCH (SCI) not addressed to the own terminal device. That is, the other terminal device can recognize the switching gap by acquiring a PSCCH (SCI) not addressed to the own terminal device, and can transmit a signal by utilizing the switching gap.

Furthermore, as another example, the switching gap may be set based on capability information regarding the terminal device. As a specific example, two or more symbols of switching gaps may be provided for a terminal device having a long processing time (including the decoding time of PSSCH and the Rx/Tx switching time), while only one symbol of switching gap may be provided for a terminal device having a short processing time. In this case, the switching gap may be set for every BWP (or subcarrier spacing).

Moreover, a part of the rear symbol of PSSCH may be used for Rx/Tx switching. As a specific example, when the receiving terminal has successfully completed decoding of data before receiving all symbols of PSSCH, the receiving terminal may use a part of the rear symbols (for example, a part of the symbol to be delivered after completion of data decoding) for Rx/Tx switching.

In addition, a head of the PSFCH or a part of an AGC symbol to be described below may be used for the Rx/Tx switching. As a specific example, the receiving terminal may puncture (suspend transmission of) a part of a head symbol of the PSFCH or an AGC symbol to be described below so as to be used for the Rx/Tx switching.

### . AGC symbol

In downlink (DL), a base station is fixed (that is, the base station is stationary), and a periodic signal is transmitted from the base station on a regular basis, and thus, the terminal device can perform automatic gain control (AGC) using the periodic signal. Similarly in the UL (Uplink), the transmission power control is performed, on a regular basis, to achieve constant reception power of the base station, suppressing a situation in which the reception power greatly changes.

In contrast, in inter-device communication between terminal devices such as D2D and V2X, both the transmitting terminal and the receiving terminal can dynamically move. Due to such characteristics, the distance between transmission and reception sides can greatly change in the inter-device communication, and thus, there is a possibility that the reception power will significantly change. In view of such a situation, there are cases where it is desirable that the receiving terminal adjust a peak level of the reception signal by performing gain control (that is, AGC) of the reception signal before demodulating the reception signal. In this manner, when the receiving terminal performs AGC, the transmitting terminal may transmit a signal for AGC (in other words, a signal usable for gain control in signal demodulation) before transmitting at least one of the PSCCH or the PSFCH, for example.

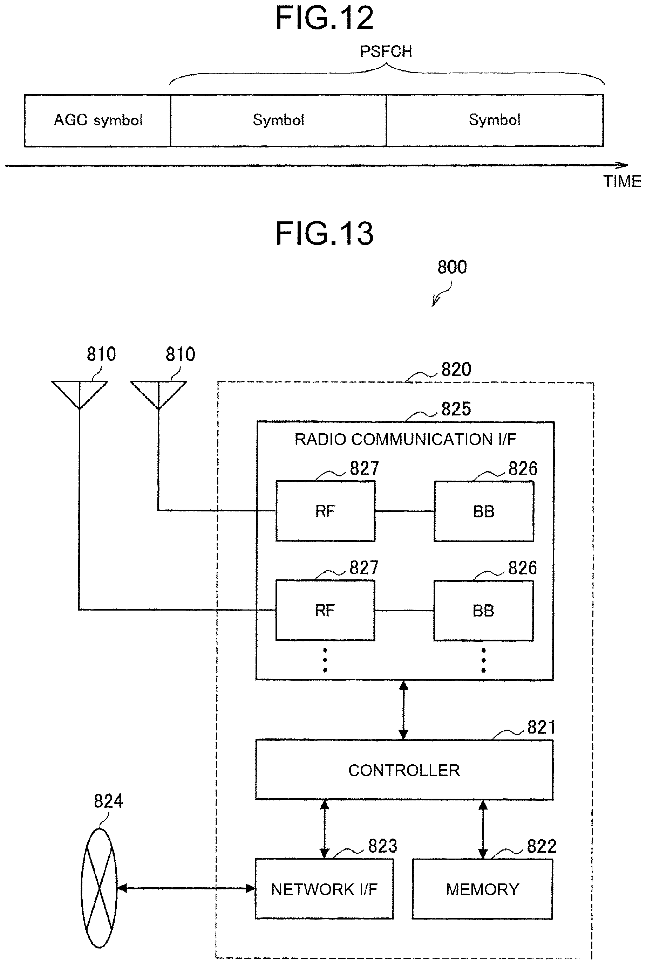

For example, FIG. 12 is a diagram illustrating an overview of the AGC symbol, including an example of a schematic frame configuration when an AGC symbol is added to the PSFCH. In FIG. 12, the horizontal axis represents time. That is, in the example illustrated in FIG. 12, an AGC symbol is added immediately before PSFCH symbols. That is, by performing AGC using the AGC symbol before demodulating the PSFCH, the receiving terminal can adjust the peak level of the reception signal (PSFCH). That is, the AGC symbol corresponds to a symbol that is usable, by a terminal device that receives a signal, for gain control (that is, AGC) in demodulation of the signal.

The condition for adding the AGC symbol to the PSFCH may be set in advance, for example. In this case, for example, the AGC symbol may be added whenever the PSFCH is transmitted.

Furthermore, as another example, an AGC symbol addition condition for PSFCH may be set by RRC signaling. In this case, for example, whether to add the AGC symbol can be set for each BWP (or subcarrier spacing).

As another example, notification of the AGC symbol addition condition for the PSFCH may be explicitly provided using the PSCCH. In this case, for example, notification of at least one of the conditions, namely, which symbol corresponds to the AGC symbol, or the presence or absence of the AGC gap, may be provided by the PSCCH.

In addition, as another example, notification of an AGC symbol addition condition for PSFCH may be implicitly provided. As a specific example, when the AGC symbol has been added to the PSCCH or the PSSCH, the AGC symbol may be added to the PSFCH. On the contrary, when the AGC symbol has not been added to the PSCCH and the PSSCH, the AGC symbol would not have to be added to the PSFCH.

The above is merely an example, of course, and the condition for adding the AGC symbol to the PSFCH is not limited to the above example. As a specific example, whether to add the AGC symbol may be determined according to the distance between transmission and reception terminals. Furthermore, as another example, whether to add the AGC symbol may be determined according to the information regarding zones in which the terminal devices are located. Furthermore, as another example, whether to add an AGC symbol may be determined according to a traffic pattern. As a specific example, regarding periodic traffic, AGC symbols need not be added to all PSFCH transmissions. Furthermore, as another example, when repetition transmission is applied, for example, the AGC symbol may be added to the first transmission, and the AGC symbol need not be added to subsequent transmissions. Furthermore, as another example, the AGC symbol need not be added until a predetermined number of times of transmission (counter) is exceeded or a predetermined time (on timer) elapses after transmission of the AGC symbol. Furthermore, whether to add the AGC symbol may be determined according to capability information regarding the terminal device. In addition, an AGC symbol may be added to a physical channel (PSCCH, PSSCH, or PSFCH) at the time of initial setup of an inter-terminal link in unicast communication or groupcast communication. In addition, the addition of the AGC symbol may be omitted in the second and subsequent feedback transmissions. For the setting of such conditions, for example, notification or setting may be performed from the transmitting terminal or the base station to the receiving terminal.

Furthermore, when the receiving terminal perform feedback using the PSFCH to the transmitting terminal, the receiving terminal may add new feedback information by adding an AGC symbol to the PSFCH. As a specific example, when the reception of the PSSCH has failed, the receiving terminal can return the PSFCH containing the AGC symbol and NACK to the transmitting terminal, thereby enabling feedback of the information regarding the reception power. An exemplary case of PSSCH reception failure is a case where the PSSCH reception fails due to outstandingly high reception power. When the reception power of the PSCCH or the PSCCH is out of a predetermined range, the receiving terminal may return the PSFCH to which the AGC symbol has been added, to the transmitting terminal.

Next, an example of the configuration of the AGC symbol will be described. The AGC symbol can include a CSI measurement signal, for example. Furthermore, as another example, the AGC symbol may be configured by extending a cyclic prefix (CP) of a head symbol of the PSCCH or the PSFCH. As another example, the AGC symbol may be composed of a signal receivable by a DSRC device. In this case, for example, the DSRC device can detect the signal to notify other devices of the resource occupancy status, enabling more efficient coexistence with DSRC in addition to the AGC effect.

In addition, the AGC signal is desirably a symbol having a length of one symbol, or one symbol or less (also referred to as a sub-symbol). In addition, the length of the AGC symbol may be a constant length regardless of the symbol length (or subcarrier spacing).

### (Overwriting of Transmission Parameters Related to PSFCH)

The transmission parameter related to the PSFCH can be overwritten before transmission of the PSFCH. Examples of the overwritable transmission parameter regarding the PSFCH include the following parameters.
- PSFCH transmission resource
- Transmission power
- PSFCH format (For example, long PSFCH or short PSFCH)
- Addition of AGC symbol
- DMRS sequence of PSFCH

Furthermore, the transmission parameter related to the PSFCH may be overwritten by another SCI, for example. As a specific example, there is an assumable situation in which the transmission parameter of the PSFCH is indicated again by another SCI different from the SCI after the transmission parameter of the PSFCH is indicated by the predetermined SCI and before the transmission of the PSFCH. In such a case, a transmission parameter indicated by the other SCI may be used.

Furthermore, as another example, when the transmission timing of the PSFCH overlaps the transmission timing or the reception timing of a signal or a channel having a higher priority, the transmission parameter related to the PSFCH may be overwritten. As a specific example, when the transmission timing of the PSFCH overlaps the transmission timing or the reception timing of the synchronization signal or the PSDCH, the allocation of the transmission resources may be controlled so as to delay the transmission timing of the PSFCH.

With the above control, it is possible to implement adaptive communication so as to be able to follow the situation of the channel or the communication.

### (Groupcast HARQ)

Next, a HARQ assuming a group cast (hereinafter, also referred to as a "groupcast HARQ" for convenience) will be described. Transmission of the PSCCH and/or PSSCH associated with a group ID can be regarded as groupcast transmission. Now, an example of a technology for implementing the groupcast HARQ will be described below.

First, a method of allocating the feedback resource for the groupcast HARQ will be described separately for a case where the transmitting terminal recognizes the terminal device belonging to the group and a case where the transmitting terminal does not recognize the terminal device belonging to the group.

In the case where the transmitting terminal recognizes the terminal device belonging to the group, the feedback resource allocation method would be different depending on whether the receiving terminal transmits ACK/NACK transmits only NACK as a response. Here, when the receiving terminal transmits ACK/NACK as a response, specifically, the receiving terminal transmits ACK as a response when the PSSCH has been successfully decoded, and transmits NACK when the PSSCH has not been successfully decoded. Furthermore, when the receiving terminal transmits only NACK as a response, specifically, the receiving terminal would not transmit a response (for example, ACK) when PSSCH decoding has been successful, and transmits NACK as a response when PSSCH decoding has failed.

When the receiving terminal transmits ACK/NACK as a response, for example, the transmitting terminal can allocate an orthogonal individual HARQ feedback resource (that is, the PSFCH resource) to each of the receiving terminals. Note that the feedback resource allocation scheme in this case is also referred to as a "feedback resource individual allocation scheme" for convenience. Here, individually allocating the feedback resource to each of the receiving terminals can indicate that different physical resources (for example, time, frequency, and orthogonal codes) will be allocated to each of the receiving terminals. In addition, the "feedback resource individual allocation scheme" corresponds to an example of the "first allocation scheme".

With application of the feedback resource individual allocation scheme, for example, the transmitting terminal can individually recognize the decoding status (for example, decoding results of PSCCH and PSSCH) of the information in each of the receiving terminals. That is, in this case, since a unique (individual) resource is allocated to each of the receiving terminals, the transmitting terminal can recognize which receiving terminal has successfully received the information and which receiving terminal has failed to receive the information.

Furthermore, with application of the feedback resource individual allocation scheme, for example, it is possible to implement feedback of discontinuous transmission (DTX) by the receiving terminal by not transmitting either the ACK or the NACK as a response. Note that, when notification of the DTX is provided, the transmitting terminal can determine that decoding of the PSCCH has failed on the receiving terminal side, for example.

In addition, when the receiving terminal transmits only NACK as a response, the transmitting terminal can selectively apply two schemes as the allocation scheme for the HARQ feedback resource.

First of all, the first scheme is the above-described "feedback resource individual allocation scheme". That is, the transmitting terminal can allocate an orthogonal individual HARQ feedback resource to each of the receiving terminals. That is, in this case, since a unique (individual) resource is allocated to each of the receiving terminals, the transmitting terminal can recognize which receiving terminal has successfully received the information and which receiving terminal has failed to receive the information.

In contrast, the second scheme is a scheme in which the transmitting terminal allocates a HARQ feedback resource commonly for the receiving terminals belonging to the group. Note that the feedback resource allocation scheme in this case is also referred to as a "feedback resource sharing allocation scheme" for convenience. Here, allocating a common feedback resource to each of the receiving terminals can indicate that the same physical resource (for example, time and frequency) is allocated so as to be shared among the receiving terminals. In addition, the "feedback resource sharing allocation scheme" corresponds to an example of the "second allocation scheme". In this case, since the resources are common among the receiving terminals belonging to the group, it is possible to improve resource utilization efficiency for HARQ feedback.

Next, an example in which the transmitting terminal does not recognize the terminal device belonging to the group will be described. In a case where the transmitting terminal does not recognize the terminal device belonging to the group, for example, a scheme in which the receiving terminal transmits only NACK as a response can be applied. In addition, a feedback resource sharing allocation scheme can be applied as the HARQ feedback resource allocation scheme.

Next, switching of the HARQ feedback resource allocation scheme in the groupcast HARQ will be described. In a case where the groupcast HARQ is performed, the above-described "feedback resource individual allocation scheme" and "feedback resource sharing allocation scheme" may be selectively applied as an allocation scheme of the HARQ feedback resource according to a predetermined condition.

As a specific example, the HARQ feedback resource allocation scheme may be switched according to the number of receiving terminals belonging to the group. More specifically, when the number of receiving terminals belonging to the group is small (that is, when the number is less than a threshold), the "feedback resource individual allocation scheme" may be applied. In contrast, when the number of receiving terminals belonging to the group is large (that is, when the number is the threshold or more) or when the number of receiving terminals belonging to the group is unknown, the "feedback resource sharing allocation scheme" may be applied.

Furthermore, as another example, the HARQ feedback resource allocation scheme may be switched according to the level of congestion of the frequency band used for inter-device communication. More specifically, when the level of the congestion of the frequency band is low (that is, when the level is less than a threshold), the "feedback resource individual allocation scheme" may be applied. In contrast, when the level of congestion of the frequency band is high (that is, when the level is the threshold or more), the "feedback resource sharing allocation scheme" may be applied.

Furthermore, as another example, the allocation scheme of the HARQ feedback resource may be switched according to the positional relationship between the transmitting terminal and each of the receiving terminals belonging to the group. More specifically, when the distance between the transmitting and receiving terminals, with respect to the receiving terminal located farthest from the transmitting terminal, is long (that is, when the distance is a threshold or more), the "feedback resource individual allocation scheme" may be applied. In contrast, when the distance between the transmitting and receiving terminals, with respect to the receiving terminal located farthest from the transmitting terminal, is short (that is, when the distance is less than the threshold), the "feedback resource sharing allocation scheme" may be applied.

Furthermore, as another example, the HARQ feedback resource allocation scheme may be switched according to the PSSCH transmission scheme. More specifically, when PSSCH is transmitted using a high Modulation and Coding Scheme (MCS) (that is, when the multi-level is a threshold or more), the "feedback resource individual allocation scheme" may be applied. In contrast, when the PSSCH is transmitted using a low MCS (that is, when the multi-level is less than the threshold), the "feedback resource sharing allocation scheme" may be applied.

Furthermore, as another example, the HARQ feedback resource allocation scheme may be switched according to the QoS level (In other words, the level of urgency). More specifically, when the QoS level is high (that is, when the level is a threshold or more), the "feedback resource individual allocation scheme" may be applied. In contrast, when the QoS level is low (that is, when the level is less than the threshold), the "feedback resource sharing allocation scheme" may be applied.

As described above, the allocation scheme of the HARQ feedback resource is selectively switched based on various conditions, thereby enabling adjustment of the communication efficiency and the overhead of the feedback resource according to the situation. Note that the above is merely an example, and other conditions different from the above may be applied as the switching condition of the HARQ feedback resource allocation scheme.

### (Response Notification Method)

Next, an example of a response (ACK/NACK or NACK) notification method will be described.

As a specific example, on-off keying may be applied to the notification of a response. In this case, for example, the terminal device that receives the feedback may determine NACK when the reception power of the predetermined resource is a threshold or more, while it determines ACK when the reception power is less than the threshold.

Furthermore, as another example, a sequence may be used for notification of a response. In this case, for example, the response may be transmitted using a sequence pattern representing ACK/NACK.

Furthermore, as another example, a payload may be used for notification of a response. In this case, the response may be transmitted by associating bit information representing ACK/NACK with the physical channel.

Furthermore, as another example, a mechanism of resource selection may be applied to notification of a response. In this case, for example, two types of feedback resources are allocated. Based on such a premise, for example, the terminal device that receives the feedback may determine ACK when the response is transmitted using one resource, and may determine NACK when the response is transmitted using the other resource.

The above is merely an example, of course, and the method is not particularly limited as long as notification of a response (ACK/NACK or NACK) can be provided to the other terminal device.

### <<4. Application Examples>>

The technology according to the present disclosure can be applied to various products. For example, the base station device 1 may be implemented as any type of evolved Node B (eNB) such as a macro eNB or a small eNB. The small eNB may be an eNB that covers a cell smaller than a macro cell, such as a pico eNB, a micro eNB, or a home (femto) eNB. Instead, the base station device 1 may be implemented as other types of base station such as a Node B or a Base Transceiver Station (BTS). The base station device 1 may include a main body (also referred to as a base station device) that controls radio communication, and one or more Remote Radio Heads (RRHs) arranged at a location different from the main body. Furthermore, various types of terminals, which will be described below, may operate as the base station device 1 by temporarily or semi-permanently executing the base station functionalities. Furthermore, at least part of the components of the base station device 1 may be implemented in a base station device or a module for the base station device.

Furthermore, for example, the terminal device 2 may be implemented as a mobile terminal such as a smartphone, a tablet Personal Computer (PC), a notebook PC, a portable game terminal, a portable/dongle type mobile router, and a digital camera, or as an in-vehicle terminal such as a car navigator. Furthermore, the terminal device 2 may be implemented as a terminal (also referred to as a Machine Type Communication (MTC) terminal) that performs Machine To Machine (M2M) communication. Furthermore, at least part of components of the terminal device 2 may be implemented in a module (for example, an integrated circuit module formed with one die) mounted on these terminals.

### <4.1. Application Examples Related to Base Station>

### (First Application Example)

FIG. 13 is a block diagram illustrating a first example of a schematic configuration of an eNB to which the technology according to the present disclosure is applicable. An eNB 800 has one or more antennas 810 and a base station device 820. Each of the antennas 810 and the base station device 820 may be connected to each other via an RF cable.

Each of the antennas 810 has a single or a plurality of antenna elements (for example, a plurality of antenna elements constituting a MIMO antenna) and is used for transmission and reception of radio signals by the base station device 820. The eNB 800 has a plurality of antennas 810 as illustrated in FIG. 13, and the plurality of antennas 810 may correspond to a plurality of frequency bands used by the eNB 800, respectively, for example. Although FIG. 13 illustrates an example in which the eNB 800 has the plurality of antennas 810, the eNB 800 may have a single antenna 810.

The base station device 820 includes a controller 821, memory 822, a network interface 823, and a radio communication interface 825.

The controller 821 may be a CPU or DSP, for example, and controls operation of various functions of a higher layer of the base station device 820. For example, the controller 821 generates a data packet from the data in the signal processed by the radio communication interface 825 and transfers the generated packet via the network interface 823. The controller 821 may generate a bundled packet by bundling data from a plurality of baseband processors and transfer the generated bundled packet. In addition, the controller 821 may include logical functions that execute controls such as radio resource control, radio bearer control, mobility management, admission control, or scheduling. Furthermore, the control may be executed in cooperation with surrounding eNBs or a core network nodes. The memory 822 includes RAM and ROM, and stores a program executed by the controller 821 and various types of control data (for example, terminal list, transmission power data, and scheduling data)

The network interface 823 is a communication interface for connecting the base station device 820 to a core network 824. The controller 821 may communicate with a core network node or other eNBs via the network interface 823. In that case, the eNB 800 may be connected to the core network node or other eNB to each other by a logical interface (for example, an S1 interface or an X2 interface). The network interface 823 may be a wired communication interface or a radio communication interface for a radio backhaul. When the network interface 823 is a radio communication interface, the network interface 823 may use a frequency band higher than the frequency band used by the radio communication interface 825, for radio communication.

The radio communication interface 825 supports a cellular communication scheme such as Long Term Evolution (LTE) or LTE-Advanced, and provides a radio connection to terminals located in the cell of the eNB 800 via the antenna 810. The radio communication interface 825 can typically include a baseband (BB) processor 826, RF circuit 827, or the like. The BB processor 826 may perform, for example, coding/decoding, modulation/demodulation, and multiplexing/demultiplexing, and executes various types of signal processing in individual layers (for example, L1, Medium Access Control (MAC), Radio Link Control (RLC), and Packet Data Convergence Protocol (PDCP)). The BB processor 826 may include some or all of the above-described logical functions instead of the controller 821. The BB processor 826 may be a module including: memory for storing a communication control program; a processor for executing the program; and related circuits. The functions of the BB processor 826 may be modified by updating the above program. Furthermore, the module may be a card or a blade inserted into a slot of the base station device 820, or may be a chip mounted on the card or the blade. The RF circuit 827 may include a mixer, a filter, an amplifier, or the like, and transmits and receives radio signals via the antenna 810.

The radio communication interface 825 may include a plurality of BB processors 826 as illustrated in FIG. 13, and the plurality of BB processors 826 may correspond to a plurality of frequency bands used by the eNB 800, respectively, for example. Furthermore, the radio communication interface 825 may include a plurality of RF circuits 827 as illustrated in FIG. 13, and the plurality of RF circuits 827 may correspond to a plurality of antenna elements, respectively, for example. Although FIG. 13 illustrates an example in which the radio communication interface 825 includes a plurality of BB processors 826 and a plurality of RF circuits 827, the radio communication interface 825 may include a single BB processor 826 or a single RF circuit 827.

In the eNB 800 illustrated in FIG. 13, one or more components of the higher layer processing unit 101 and the control unit 103 described with reference to FIG. 2 may be implemented in the radio communication interface 825. Alternatively, at least part of these components may be implemented in the controller 821. As an example, the eNB 800 is equipped with a module including part or all of the radio communication interface 825 (for example, the BB processor 826) and/or the controller 821, and the module may be equipped with one or more of the above components. In this case, the module may store a program for causing the processor to function as the one or more components (in other words, a program for causing the processor to perform the operation of the one or more components) and may execute the program. As another example, the program causing the processor to function as the one or more of the above components may be installed in the eNB 800, and the radio communication interface 825 (for example, the BB processor 826) and/or the controller 821 may execute the program. As described above, the eNB 800, the base station device 820, or the above module may be provided as a device including the one or more components, and a program for causing the processor to function as the one or more components may be provided. Furthermore, a readable recording medium on which the above program is recorded may be provided.

Furthermore, in the eNB 800 illustrated in FIG. 13, the reception unit 105 and the transmission unit 107 described with reference to FIG. 2 may be implemented in the radio communication interface 825 (for example, RF circuit 827). Furthermore, the transmission/reception antenna 109 may be implemented in the antenna 810.

### (Second Application Example)

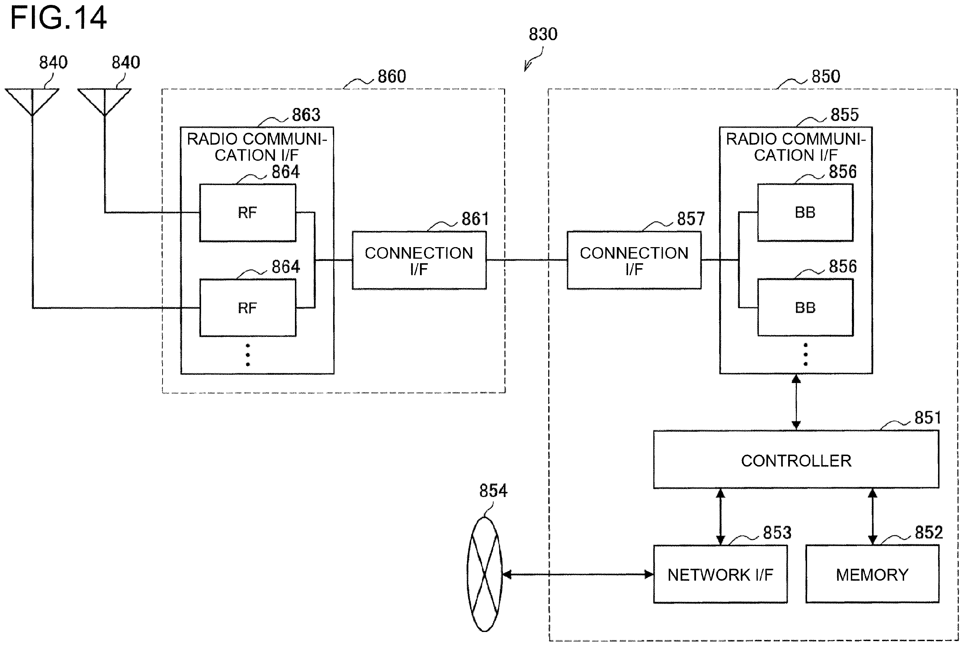

FIG. 14 is a block diagram illustrating a second example of a schematic configuration of an eNB to which the technology according to the present disclosure is applicable. An eNB 830 has one or more antennas 840, a base station device 850, and an RRH 860. Each of the antennas 840 and the RRH 860 can be connected to each other via an RF cable. Furthermore, the base station device 850 and the RRH 860 can be connected to each other by a high-speed line such as an optical fiber cable.

Each of the antennas 840 has a single or a plurality of antenna elements (for example, a plurality of antenna elements constituting a MIMO antenna) and is used for transmission and reception of radio signals by the RRH 860. The eNB 830 has a plurality of antennas 840 as illustrated in FIG. 14, and the plurality of antennas 840 may correspond to a plurality of frequency bands used by the eNB 830, respectively, for example. Although FIG. 14 illustrates an example in which the eNB 830 has the plurality of antennas 840, the eNB 830 may have a single antenna 840.

The base station device 850 includes a controller 851, a memory 852, a network interface 853, a radio communication interface 855, and a connection interface 857. The controller 851, the memory 852, and the network interface 853 are similar to the controller 821, memory 822, and network interface 823 described with reference to FIG. 13, respectively.

The radio communication interface 855 supports a cellular communication scheme such as LTE or LTE-Advanced, and provides a radio connection to terminals located in the sector corresponding to the RRH 860 via the RRH 860 and the antenna 840. The radio communication interface 855 can typically include a BB processor 856 or the like. The BB processor 856 is similar to the BB processor 826 described with reference to FIG. 13, except that connection to an RF circuit 864 of the RRH 860 is made via the connection interface 857. The radio communication interface 855 may include a plurality of BB processors 856 as illustrated in FIG. 13, and the plurality of BB processors 856 may correspond to a plurality of frequency bands used by the eNB 830, respectively, for example. Although FIG. 14 illustrates an example in which the radio communication interface 855 includes a plurality of BB processors 856, the radio communication interface 855 may include a single BB processor 856.

The connection interface 857 is an interface for connecting the base station device 850 (radio communication interface 855) to the RRH 860. The connection interface 857 may be a communication module for communication over the high-speed line connecting the base station device 850 (radio communication interface 855) and the RRH 860.

The RRH 860 also includes a connection interface 861 and a radio communication interface 863.

The connection interface 861 is an interface for connecting the RRH 860 (radio communication interface 863) to the base station device 850. The connection interface 861 may be a communication module for communication over the high-speed line.

The radio communication interface 863 transmits and receives radio signals via the antenna 840. The radio communication interface 863 can typically include the RF circuit 864 or the like. The RF circuit 864 may include a mixer, a filter, an amplifier, or the like, and transmits and receives radio signals via the antenna 840. The radio communication interface 863 includes a plurality of RF circuits 864 as illustrated in FIG. 14, and the plurality of RF circuits 864 may correspond to a plurality of antenna elements, respectively, for example. Although FIG. 14 illustrates an example in which the radio communication interface 863 includes a plurality of RF circuits 864, the radio communication interface 863 may include a single RF circuit 864.

In the eNB 830 illustrated in FIG. 14, one or more components of the higher layer processing unit 101 and the control unit 103 described with reference to FIG. 2 may be implemented in the radio communication interface 855 and/or the radio communication interface 863. Alternatively, at least part of these components may be implemented in the controller 851. As an example, the eNB 830 may be equipped with a module including a part or all of the radio communication interface 855 (for example, the BB processor 856) and/or the controller 851, and the module may be equipped with one or more of the above components. In this case, the module may store a program for causing the processor to function as the one or more components (in other words, a program for causing the processor to perform the operation of the one or more components) and may execute the program. As another example, the program causing the processor to function as the one or more of the above components may be installed in the eNB 830, and the radio communication interface 855 (for example, the BB processor 856) and/or the controller 851 may execute the program. As described above, the eNB 830, the base station device 850, or the above module may be provided as a device including the one or more components, and a program for causing the processor to function as the one or more components may be provided. Furthermore, a readable recording medium on which the above program is recorded may be provided.

Furthermore, in the eNB 830 illustrated in FIG. 14, the reception unit 105 and the transmission unit 107 described with reference to FIG. 2 may be implemented in the radio communication interface 863 (for example, RF circuit 864). Furthermore, the transmission/reception antenna 109 may be implemented in the antenna 840.

### <<4.2. Application Examples Related to Terminal Device>>

### (First Application Example)

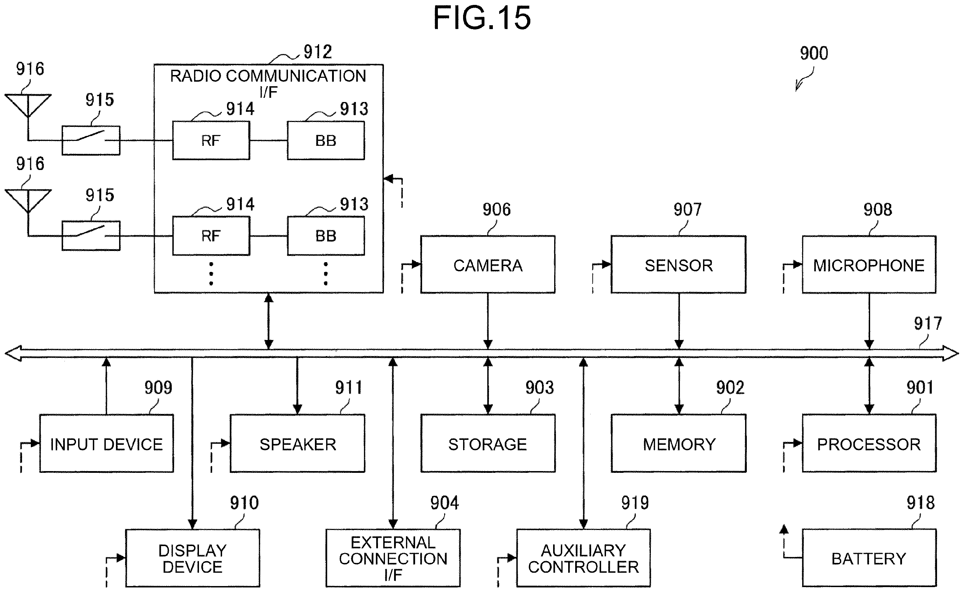

FIG. 15 is a block diagram illustrating an example of a schematic configuration of a smartphone 900 to which the technology according to the present disclosure can be applied. The smartphone 900 includes a processor 901, memory 902, storage 903, an external connection interface 904, a camera 906, a sensor 907, a microphone 908, an input device 909, a display device 910, a speaker 911, a radio communication interface 912, one or more antenna switches 915, one or more antennas 916, a bus 917, a battery 918, and an auxiliary controller 919.

The processor 901 may be a CPU or a System on Chip (SoC), for example, and controls the functions of the application layer and other layers of the smartphone 900. The memory 902 includes RAM and ROM and stores programs to be executed by the processor 901, and data. The storage 903 may include a storage medium such as semiconductor memory or a hard disk. The external connection interface 904 is an interface for connecting an external device such as a memory card or a Universal Serial Bus (USB) device to the smartphone 900.

The camera 906 includes an imaging element such as a Charge Coupled Device (CCD) or a Complementary Metal Oxide Semiconductor (CMOS), and generates a captured image. Examples of the sensor 907 can include a group of sensors such as a positioning sensor, a gyro sensor, a geomagnetic sensor, and an acceleration sensor. The microphone 908 converts the voice input to the smartphone 900 into a voice signal. The input device 909 includes a touch sensor that detects a touch on the screen of the display device 910, a keypad, a keyboard, a button, or a switch and receives an input of operation or information from the user. The display device 910 has a screen such as a liquid crystal display (LCD) or an organic light emitting diode (OLED) display, and displays an output image of the smartphone 900. The speaker 911 converts the voice signal output from the smartphone 900 into voice.

The radio communication interface 912 supports a cellular communication scheme such as LTE or LTE-Advanced and executes radio communication. The radio communication interface 912 can typically include a BB processor 913, an RF circuit 914, or the like. The BB processor 913 may perform, for example, encoding/decoding, modulation/demodulation, and multiplexing/demultiplexing, and performs various signal processing for radio communication. The RF circuit 914 may include a mixer, a filter, an amplifier, or the like, and transmits and receives radio signals via the antenna 916. The radio communication interface 912 may be a one-chip module integrating the BB processor 913 and the RF circuit 914. The radio communication interface 912 may include a plurality of BB processors 913 and a plurality of RF circuits 914 as illustrated in FIG. 15. Although FIG. 15 illustrates an example in which the radio communication interface 912 includes a plurality of BB processors 913 and a plurality of RF circuits 914, the radio communication interface 912 may include a single BB processor 913 or a single RF circuit 914.

Furthermore, the radio communication interface 912 may support other types of radio communication scheme such as short-range radio communication scheme, near field radio communication scheme, or wireless Local Area Network (LAN) scheme in addition to the cellular communication scheme. In that case, the radio communication interface 912 may include the BB processor 913 and the RF circuit 914 for each of the radio communication schemes.

Each of the antenna switches 915 switches the connection destination of the antenna 916 between a plurality of circuits included in the radio communication interface 912 (for example, circuits for different radio communication schemes).

Each of the antennas 916 has a single or a plurality of antenna elements (for example, a plurality of antenna elements constituting a MIMO antenna) and is used for transmitting and receiving radio signals by the radio communication interface 912. The smartphone 900 may have a plurality of antennas 916 as illustrated in FIG. 15. Although FIG. 15 illustrates an example in which the smartphone 900 has the plurality of antennas 916, the smartphone 900 may have a single antenna 916.

Furthermore, the smartphone 900 may be provided with an antenna 916 for each of the radio communication schemes. In that case, the antenna switch 915 may be omitted from the configuration of the smartphone 900.

Bus 917 provides mutual connection between the processor 901, the memory 902, the storage 903, the external connection interface 904, the camera 906, the sensor 907, the microphone 908, the input device 909, the display device 910, the speaker 911, the radio communication interface 912, and the auxiliary controller 919. The battery 918 supplies power to individual blocks of the smartphone 900 illustrated in FIG. 15 via the power supply lines partially illustrated by the broken lines in the figure. The auxiliary controller 919 controls operation of minimum necessary functions of the smartphone 900 during a sleep mode, for example.

In the smartphone 900 illustrated in FIG. 15, one or more components of the higher layer processing unit 201 and the control unit 203 described with reference to FIG. 3 may be implemented in the radio communication interface 912. Alternatively, at least part of these components may be implemented in the processor 901 or the auxiliary controller 919. As an example, the smartphone 900 may be equipped with a module including a part (for example, BB processor 913) or all of the radio communication interface 912, the processor 901, and/or the auxiliary controller 919, and may be equipped with one or more of the above-described components in the module. In this case, the module may store a program for causing the processor to function as the one or more components (in other words, a program for causing the processor to perform the operation of the one or more components) and may execute the program. As another example, the program causing the processor to function as the one or more of the above components may be installed in the smartphone 900, and the radio communication interface 912 (for example, the BB processor 913), the processor 901, and/or the auxiliary controller 919 may execute the program. As described above, the smartphone 900 or the above module may be provided as a device including the one or more components, and a program for causing the processor to function as the one or more components may be provided. Furthermore, a readable recording medium on which the above program is recorded may be provided.

Furthermore, in the smartphone 900 illustrated in FIG. 15, for example, the reception unit 205 and the transmission unit 207 described with reference to FIG. 3 may be implemented in the radio communication interface 912 (for example, RF circuit 914). Furthermore, the transmission/reception antenna 209 may be implemented in the antenna 916.

### (Second Application Example)

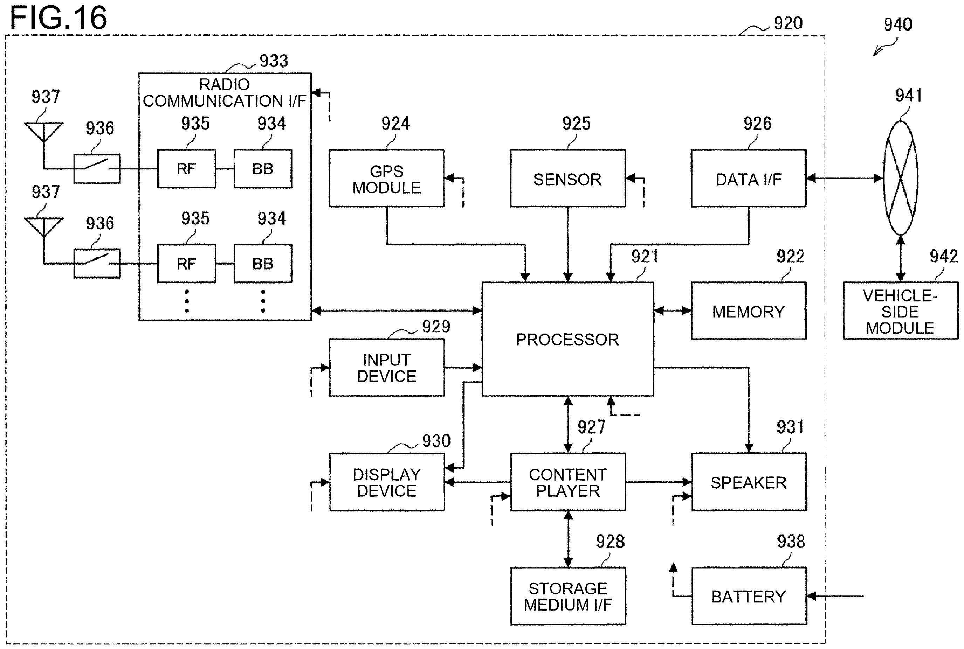

FIG. 16 is a block diagram illustrating an example of a schematic configuration of a car navigator 920 to which the technology according to the present disclosure is applicable. The car navigator 920 includes a processor 921, memory 922, a Global Positioning System (GPS) module 924, a sensor 925, a data interface 926, a content player 927, a storage medium interface 928, an input device 929, a display device 930, a speaker 931, a radio communication interface 933, one or more antenna switches 936, one or more antennas 937, and a battery 938.

The processor 921 may be a CPU or SoC, for example, and controls the navigation function and other functions of the car navigator 920. The memory 922 includes RAM and ROM and stores programs to be executed by the processor 921, and data.

The GPS module 924 measures the position (including latitude, longitude, and altitude) of the car navigator 920 using GPS signals received from GPS satellites. The sensor 925 can include a group of sensors such as a gyro sensor, a geomagnetic sensor, and a barometric pressure sensor, for example. The data interface 926 is connected to an in-vehicle network 941 via a terminal (not illustrated), for example, and acquires data generated on the vehicle side such as vehicle speed data.

The content player 927 plays pieces of content stored on a storage medium (for example, a CD or DVD) inserted into the storage medium interface 928. The input device 929 includes a touch sensor that detects a touch on the screen of the display device 930, a button, or a switch and receives an input of operation or information from the user. The display device 930 includes a screen such as an LCD or OLED display and displays an image of a navigation function or a content to be played. The speaker 931 outputs the sound of the navigation function or the content to be played.

The radio communication interface 933 supports a cellular communication scheme such as LTE or LTE-Advanced and executes radio communication. The radio communication interface 933 can typically include a BB processor 934, an RF circuit 935, or the like. The BB processor 934 may perform, for example, encoding/decoding, modulation/demodulation, and multiplexing/demultiplexing, and performs various signal processing for radio communication. The RF circuit 935 may include a mixer, a filter, an amplifier, or the like, and transmits and receives radio signals via the antenna 937. The radio communication interface 933 may be a one-chip module integrating the BB processor 934 and the RF circuit 935. The radio communication interface 933 may include a plurality of BB processors 934 and a plurality of RF circuits 935 as illustrated in FIG. 16. Although FIG. 16 illustrates an example in which the radio communication interface 933 includes a plurality of BB processors 934 and a plurality of RF circuits 935, the radio communication interface 933 may include a single BB processor 934 or a single RF circuit 935.

Furthermore, the radio communication interface 933 may support other types of radio communication schemes such as short-range radio communication scheme, near field radio communication scheme, or a wireless LAN scheme in addition to the cellular communication scheme. In that case, the radio communication interface 933 may include the BB processor 934 and the RF circuit 935 for each of the radio communication schemes.

Each of the antenna switches 936 switches the connection destination of the antenna 937 between a plurality of circuits included in the radio communication interface 933 (for example, circuits for different radio communication schemes).

Each of the antennas 937 has a single or a plurality of antenna elements (for example, a plurality of antenna elements constituting a MIMO antenna) and is used for transmitting and receiving radio signals by the radio communication interface 933. The car navigator 920 may have a plurality of antennas 937 as illustrated in FIG. 16. Although FIG. 16 illustrates an example in which the car navigator 920 has a plurality of antennas 937, the car navigator 920 may have a single antenna 937.

Furthermore, the car navigator 920 may include the antenna 937 for each of the radio communication schemes. In that case, the antenna switch 936 may be omitted from the configuration of the car navigator 920.

The battery 938 supplies power to individual blocks of the car navigator 920 illustrated in FIG. 16 via the power supply lines partially illustrated by the broken lines in the figure. In addition, the battery 938 stores electric power supplied from the vehicle side.

In the car navigator 920 illustrated in FIG. 16, one or more components of the higher layer processing unit 201 and the control unit 203 described with reference to FIG. 3 may be implemented in the radio communication interface 933. Alternatively, at least part of these components may be implemented in the processor 921. As an example, the car navigator 920 may be equipped with a module including a part (for example, BB processor 934) or all of the radio communication interface 933 and/or the processor 921, and the module may be equipped with one or more of the above components. In this case, the module may store a program for causing the processor to function as the one or more components (in other words, a program for causing the processor to perform the operation of the one or more components) and may execute the program. As another example, a program causing the processor to function as one or more of the above components may be installed in the car navigator 920, and the radio communication interface 933 (for example, the BB processor 934) and/or the processor 921 may execute the program. As described above, the car navigator 920 or the above module may be provided as a device including the one or more components, and a program for causing the processor to function as the one or more components may be provided. Furthermore, a readable recording medium on which the above program is recorded may be provided.

Furthermore, in the car navigator 920 illustrated in FIG. 16, the reception unit 205 and the transmission unit 207 described with reference to FIG. 3 may be implemented in the radio communication interface 933 (for example, RF circuit 935), for example. Furthermore, the transmission/reception antenna 209 may be implemented in the antenna 937.

Furthermore, the technique according to the present disclosure may be actualized as an in-vehicle system (or vehicle) 940 including one or more blocks of the car navigator 920 described above, the in-vehicle network 941, and a vehicle-side module 942. That is, the in-vehicle system (or vehicle) 940 may be provided as a device including at least one of the higher layer processing unit 201, the control unit 203, the reception unit 205, or the transmission unit 207. The vehicle-side module 942 generates vehicle-side data such as vehicle speed, engine speed, or failure information, and outputs the generated data to the in-vehicle network 941.

### <<5. Conclusion>>

As described above, in a system according to an embodiment of the present disclosure, a communication device (receiving terminal) includes: a communication unit that performs radio communication; and a control unit that performs control so that a response to transmission of data from another terminal device (transmitting terminal) via inter-device communication is to be transmitted to the other terminal device via the inter-device communication. The control unit determines a resource to be used for the transmission of the response based on the condition related to the inter-device communication. Furthermore, the communication device (transmitting terminal) includes: a communication unit that performs radio communication; and a control unit that performs control such that data is to be transmitted to another terminal device (receiving terminal) via inter-device communication. The control unit performs control to acquire a response to transmission of the data transmitted from the other terminal device using a resource according to a condition related to the inter-device communication.

With the above configuration, in inter-device communication (for example, NR V2X) between terminal devices that assume application of NR, it is possible to ensure, in a more suitable manner, resources usable for transmission of a response according to a data reception result. That is, even when unicast or groupcast (multicast) is applied to the inter-device communication, it is possible to implement, in a more suitable manner, feedback of a response according to a data reception result. More specifically, with the above-described configuration, it is possible to apply HARQ, in a more preferable manner, to inter-device communication (for example, NR V2X) between terminal devices that assume application of NR. Therefore, with the technology according to the present disclosure, in inter-device communication between terminal devices represented by NR V2X, it is possible to implement highly efficient unicast communication and groupcast communication in a more suitable manner.

The preferred embodiments of the present disclosure have been described in detail above with reference to the accompanying drawings. However, the technical scope of the present disclosure is not limited to such examples. It will be apparent to those skilled in the art of the present disclosure that various modifications and alterations can be conceived within the scope of the technical idea described in the claims and naturally fall technical scope of the present disclosure is not limited to such examples. It will be apparent to those skilled in the art of the present disclosure that various modifications and alterations can be conceived within the scope of the of the invention as defined in the appended claims.

Furthermore, the effects described in the present specification are merely illustrative or exemplary and are not limited. That is, the technique according to the present disclosure can exhibit other effects that are apparent to those skilled in the art from the description of the present specification in addition to or instead of the above effects.

### Reference Signs List

- 1: BASE STATION DEVICE
- 101: HIGHER LAYER PROCESSING UNIT
- 103: CONTROL UNIT
- 105: RECEPTION UNIT
- 1051: DECODING UNIT
- 1053: DEMODULATION UNIT
- 1055: DEMULTIPLEXING UNIT
- 1057: RADIO RECEPTION UNIT
- 1059: CHANNEL MEASUREMENT UNIT
- 107: TRANSMISSION UNIT
- 1071: ENCODING UNIT
- 1073: MODULATION UNIT
- 1075: MULTIPLEXING UNIT
- 1077: RADIO TRANSMISSION UNIT
- 1079: LINK REFERENCE SIGNAL GENERATION UNIT
- 109: TRANSMISSION/RECEPTION ANTENNA
- 2: TERMINAL DEVICE
- 201: HIGHER LAYER PROCESSING UNIT
- 203: CONTROL UNIT
- 205: RECEPTION UNIT
- 2051: DECODING UNIT
- 2053: DEMODULATION UNIT
- 2055: DEMULTIPLEXING UNIT
- 2057: RADIO RECEPTION UNIT
- 2059: CHANNEL MEASUREMENT UNIT
- 207: TRANSMISSION UNIT
- 2071: ENCODING UNIT
- 2073: MODULATION UNIT
- 2075: MULTIPLEXING UNIT
- 2077: RADIO TRANSMISSION UNIT
- 2079: LINK REFERENCE SIGNAL GENERATION UNIT
- 209: TRANSMISSION/RECEPTION ANTENNA

## Claims

1. A first terminal device (2) comprising:
a communication unit (205)configured to perform radio communication; and
a control unit (203) configured to perform control so that a response to transmission of data from a second terminal device (2) via inter-device communication is to be transmitted to the second terminal device via the inter-device communication between the first and second terminal devices via a sidelink,
wherein the control unit (203) is configured to determine a resource to be used for transmission of the response based on a condition related to the inter-device communication,
**characterized in that** the control unit (203) is further configured to associate, with the response, a symbol usable for gain control in demodulation of the response, based on a predetermined condition.

2. The communication device according to claim 1,
wherein the control unit (203) is configured to determine a resource to be used for transmission of the response based on information notification of which is provided from the second terminal device in association with transmission of the data.

3. The communication device according to claim 2,
wherein the information notification of which is provided from the second terminal device is information regarding the resource, in particular wherein the information regarding the resource includes information regarding a time offset from first control information with which the resource is associated.

4. The communication device according to claim 2,
wherein the information notification of which is provided from the second terminal device is information regarding a condition of the inter-device communication.

5. The communication device according to claim 4,
wherein the information related to the condition of the inter-device communication includes at least one of:
information regarding a scrambling sequence of first control information with which the resource is associated; or
second control information that is different from the first control information and relates to the inter-device communication, in particular wherein the second control information includes HARQ process ID.

6. The communication device according to any one of claims 2 to 4,
wherein a set of values that can be obtained as the information notification of which is provided from the second terminal device is selectively switched according to a predetermined condition, in particular a condition related to at least one of:
urgency associated with a packet of data; or
a level of congestion of a frequency band used for the inter-device communication.

7. The communication device according to claim 1,
wherein the control unit (203) is configured to determine a resource to be used for transmission of the response based on information regarding at least one of:
urgency associated with a packet of data;
capability of the communication device, related to the inter-device communication;
a level of congestion of a frequency band used for the inter-device communication; or
occupancy of the frequency band by the communication device.

8. The communication device according to any preceding claim,
wherein the control unit (203) is configured to individually determine the resource for each of transmissions of the response to each of a plurality of the second terminal devices or determine the resource common to transmission of the response to each of a plurality of the second terminal devices.

9. The communication device according to any preceding claim,
wherein the control unit (203) is configured to associate, with the response, a symbol usable for gain control in demodulation of the response according to information transmitted from the second terminal device via the inter-device communication between the first and second terminal devices via a sidelink, and/or according to whether the symbol usable for gain control in demodulation of first control information with which the resource is associated, is associated with the first control information.

10. A second terminal device (2) comprising:
a communication unit (207) configured to perform radio communication; and
a control unit (203) configured to perform control such that data is to be transmitted to a first terminal device (2) via inter-device communication,
wherein the control unit (203) is configured to perform control to acquire a response to transmission of the data, transmitted from the first terminal device using a resource to be used for transmission of the response based on a condition related to the inter-device communicatior between the first and second terminal devices, via a sidelink,
**characterized in that** the control unit (203) is configured to determine, based on a predetermined condition, which of the following schemes is to be applied as an allocation scheme of the resource:
a first allocation scheme of individually allocating the resource to a plurality of the first terminal devices; or
a second allocation scheme of allocating the resource common to a plurality of the first terminal devices.

11. The communication device according to claim 10,
wherein the control unit (203) is configured to
allocate the resource to the first terminal device, and
control such that notification of information corresponding to an allocation result of the resource is to be provided to the first terminal device.

12. The communication device according to claim 11,
wherein the control unit (203) is configured to individually allocate the resource to a plurality of the first terminal devices or
allocate the resource common to a plurality of the first terminal devices, in particular in a case of a setting in which the response is not to be transmitted from the first terminal device when decoding of the data in the first terminal device is successful.

13. The communication device according to claim 11,
wherein the control unit (203) is configured to determine, based on a predetermined condition, which of the first and second schemes is to be applied as an allocation scheme of the resource based on a condition related to at least one of:
quantity of the first terminal devices to which the data is to be transmitted; or
a level of congestion of a frequency band used for the inter-device communication.

14. A communication method to be executed by a first terminal device (2), the communication method comprising:
performing radio communication;
performing control so that a response to transmission of data from a second terminal device (2) via inter-device communication is to be transmitted to the second terminal device via the inter-device communication between the first and second terminal devices via a sidelink; and
determining a resource to be used for transmission of the response based on a condition related to the inter-device communication,
**characterized by** associating, with the response, a symbol usable for gain control in demodulation of the response, based on a predetermined condition.

15. A communication method to be executed by a second terminal device (2), the communication method comprising:
performing radio communication;
performing control such that data is to be transmitted to a first terminal device (1) via inter-device communication between the first and second terminal devices via a sidelink; and
performing control to acquire a response to transmission of the data, transmitted from the first terminal device using a resource to be used for transmission of the response based on a condition related to the inter-device communication , between the first and second terminal devices, via a sidelink,
**characterized by** determining, based on a predetermined condition, which of the following schemes is to be applied as an allocation scheme of the resource:
a first allocation scheme of individually allocating the resource to a plurality of the first terminal devices; or
a second allocation scheme of allocating the resource common to a plurality of the first terminal devices.

## Patentansprüche

1. Erste Endvorrichtung (2), umfassend:
eine Kommunikationseinheit (205), die konfiguriert ist, um Funkkommunikation durchzuführen; und
eine Steuereinheit (203), die konfiguriert ist, um eine Steuerung derart durchzuführen, dass eine Antwort auf eine Übertragung von Daten von einer zweiten Endvorrichtung (2) über Zwischenvorrichtungskommunikation an die zweite Endvorrichtung über die Zwischenvorrichtungskommunikation zwischen der ersten und zweiten Endvorrichtung über einen Sidelink übertragen werden soll,
wobei die Steuereinheit (203) konfiguriert ist, um eine für die Übertragung der Antwort zu verwendende Ressource basierend auf einer Bedingung zu bestimmen, die sich auf die Zwischenvorrichtungskommunikation bezieht,
**dadurch gekennzeichnet, dass** die Steuereinheit (203) ferner konfiguriert ist, um der Antwort basierend auf einer vorgegebenen Bedingung ein Symbol zuzuordnen, das für eine Verstärkungsregelung bei einer Demodulation der Antwort verwendet werden kann.

2. Kommunikationsvorrichtung nach Anspruch 1,
wobei die Steuereinheit (203) konfiguriert ist, um eine für die Übertragung der Antwort zu verwendende Ressource basierend auf einer Informationsbenachrichtigung zu bestimmen, die von der zweiten Endvorrichtung im Zusammenhang mit der Übertragung der Daten bereitgestellt wird.

3. Kommunikationsvorrichtung nach Anspruch 2,
wobei die Informationsbenachrichtigung, die von der zweiten Endvorrichtung bereitgestellt wird, Informationen bezüglich der Ressource ist, insbesondere wobei die Informationen bezüglich der Ressource Informationen bezüglich eines Zeitversatzes zu ersten Steuerinformationen, denen die Ressource zugeordnet ist, einschließt.

4. Kommunikationsvorrichtung nach Anspruch 2,
wobei die Informationsbenachrichtigung, die von der zweiten Endvorrichtung bereitgestellt wird, Informationen bezüglich einer Bedingung der Zwischenvorrichtungskommunikation ist.

5. Kommunikationsvorrichtung nach Anspruch 4,
wobei die Informationen bezüglich der Bedingung der Zwischenvorrichtungskommunikation mindestens eines einschließen von:
Informationen bezüglich einer Verschlüsselungssequenz der ersten Steuerinformationen, denen die Ressource zugeordnet ist; oder
zweite Steuerinformationen, die sich von den ersten Steuerinformationen unterscheiden und sich auf die Zwischenvorrichtungskommunikation beziehen, insbesondere wobei die zweiten Steuerinformationen eine HARQ-Prozess-ID einschließen.

6. Kommunikationsvorrichtung nach einem der Ansprüche 2 bis 4,
wobei ein Satz von Werten, die als die Informationsbenachrichtigung erhalten werden können, die von der zweiten Endvorrichtung bereitgestellt wird, selektiv gemäß einer vorgegebenen Bedingung umgeschaltet wird, insbesondere einer Bedingung, die sich auf mindestens eines bezieht von:
Dringlichkeit, die einem Datenpaket zugeordnet ist; oder
Überlastungsgrad eines Frequenzbandes, das für die Zwischenvorrichtungskommunikation verwendet wird.

7. Kommunikationsvorrichtung nach Anspruch 1,
wobei die Steuereinheit (203) konfiguriert ist, um eine für die Übertragung der Antwort zu verwendende Ressource basierend auf Informationen zu bestimmen, die sich auf mindestens eines beziehen von:
Dringlichkeit, die einem Datenpaket zugeordnet ist;
Fähigkeit der Kommunikationsvorrichtung in Bezug auf die Zwischenvorrichtungskom munikation;
Überlastungsgrad eines Frequenzbandes, das für die Zwischenvorrichtungskommunikation verwendet wird; oder
Belegung des Frequenzbandes durch die Kommunikationsvorrichtung.

8. Kommunikationsvorrichtung nach einem der vorstehenden Ansprüche,
wobei die Steuereinheit (203) konfiguriert ist, um die Ressource für jede der Übertragungen der Antwort an jede einer Vielzahl von zweiten Endvorrichtungen individuell zu bestimmen oder die Ressource, die der Übertragung der Antwort an jede einer Vielzahl der zweiten Endvorrichtungen gemeinsam ist, zu bestimmen.

9. Kommunikationsvorrichtung nach einem der vorstehenden Ansprüche,
wobei die Steuereinheit (203) konfiguriert ist, um der Antwort ein Symbol, das für die Verstärkungsregelung bei der Demodulation der Antwort verwendet werden kann, gemäß den von der zweiten Endvorrichtung über die Zwischenvorrichtungskommunikation zwischen der ersten und zweiten Endvorrichtung über einen Sidelink übertragenen Informationen zuzuordnen, und/oder abhängig davon, ob das Symbol, das für die Verstärkungsregelung bei der Demodulation von ersten Steuerinformationen verwendbar ist, denen die Ressource zugeordnet ist, den ersten Steuerinformationen zugeordnet ist.

10. Zweite Endvorrichtung (2), umfassend:
eine Kommunikationseinheit (207), die konfiguriert ist, um Funkkommunikation durchzuführen; und
eine Steuereinheit (203), die konfiguriert ist, um eine Steuerung derart durchzuführen, dass Daten an eine erste Endvorrichtung (2) über Zwischenvorrichtungskommunikation übertragen werden sollen,
wobei die Steuereinheit (203) konfiguriert ist, um eine Steuerung zum Erfassen einer Antwort auf die Übertragung der Daten durchzuführen, die von der ersten Endvorrichtung unter Verwendung einer Ressource, die für die Übertragung der Antwort basierend auf einer Bedingung, die sich auf die Zwischenvorrichtungskommunikation zwischen der ersten und der zweiten Endvorrichtung bezieht, zu verwenden ist, über einen Sidelink übertragen werden,
**dadurch gekennzeichnet, dass** die Steuereinheit (203) konfiguriert ist, um basierend auf einer vorgegebenen Bedingung zu bestimmen, welches der folgenden Schemata als Zuweisungsschema der Ressource anzuwenden ist:
ein erstes Zuweisungsschema zum individuellen Zuweisen der Ressource an eine Vielzahl der ersten Endvorrichtungen; oder
ein zweites Zuweisungsschema zum Zuweisen der Ressource gemeinsam an eine Vielzahl der ersten Endvorrichtungen.

11. Kommunikationsvorrichtung nach Anspruch 10,
wobei die Steuereinheit (203) konfiguriert ist, um die Ressource der ersten Endvorrichtung zuzuweisen, und
eine Steuerung so durchzuführen, dass eine Benachrichtigung über Informationen, die einem Zuweisungsergebnis der Ressource entsprechen, der ersten Endvorrichtung bereitzustellen ist.

12. Kommunikationsvorrichtung nach Anspruch 11,
wobei die Steuereinheit (203) konfiguriert ist, um die Ressource individuell einer Vielzahl der ersten Endvorrichtungen zuzuweisen oder
die Ressource gemeinsam einer Vielzahl der ersten Endvorrichtungen zuzuweisen, insbesondere im Falle einer Situation, bei der die Antwort nicht von der ersten Endvorrichtung übertragen werden soll, wenn das Decodieren der Daten in der ersten Endvorrichtung erfolgreich ist.

13. Kommunikationsvorrichtung nach Anspruch 11,
wobei die Steuereinheit (203) konfiguriert ist, um basierend auf einer vorgegebenen Bedingung zu bestimmen, welches von dem ersten und dem zweiten Schema als Zuweisungsschema der Ressource anzuwenden ist, basierend auf einer Bedingung, die sich auf mindestens eines bezieht von:
Anzahl der ersten Endvorrichtungen, an die die Daten übertragen werden sollen; oder
Überlastungsgrad eines Frequenzbandes, das für die Zwischenvorrichtungskommunikation verwendet wird.

14. Kommunikationsverfahren, das durch eine erste Endvorrichtung (2) auszuführen ist, das Kommunikationsverfahren umfassend:
Durchführen von Funkkommunikation;
Durchführen einer Steuerung derart, dass eine Antwort auf eine Übertragung von Daten von einer zweiten Endvorrichtung (2) über Zwischenvorrichtungskommunikation an die zweite Endvorrichtung über die Zwischenvorrichtungskommunikation zwischen der ersten und zweiten Endvorrichtung über einen Sidelink übertragen werden soll; und
Bestimmen einer für die Übertragung der Antwort zu verwendenden Ressource basierend auf einer Bedingung, die sich auf die Zwischenvorrichtungskommunikation bezieht,
**gekennzeichnet durch** ein Zuordnen eines Symbols zu der Antwort, das für eine Verstärkungsregelung bei einer Demodulation der Antwort verwendbar ist, basierend auf einer vorgegebenen Bedingung.

15. Kommunikationsverfahren, das durch eine zweite Endvorrichtung (2) auszuführen ist, das Kommunikationsverfahren umfassend:
Durchführen von Funkkommunikation;
Durchführen einer Steuerung derart, dass Daten an eine erste Endvorrichtung (1) über Zwischenvorrichtungskommunikation zwischen der ersten und der zweiten Endvorrichtung über einen Sidelink übertragen werden sollen; und
Durchführen einer Steuerung zum Erfassen einer Antwort auf die Übertragung der Daten, die von der ersten Endvorrichtung unter Verwendung einer Ressource, die für die Übertragung der Antwort basierend auf einer Bedingung, die sich auf die Zwischenvorrichtungskommunikation zwischen der ersten und der zweiten Endvorrichtung bezieht, zu verwenden ist, über einen Sidelink übertragen werden,
**gekennzeichnet durch** Bestimmen, basierend auf einer vorgegebenen Bedingung, welches der folgenden Schemata als Zuweisungsschema der Ressource anzuwenden ist:
ein erstes Zuweisungsschema zum individuellen Zuweisen der Ressource an eine Vielzahl der ersten Endvorrichtungen; oder
ein zweites Zuweisungsschema zum Zuweisen der Ressource gemeinsam an eine Vielzahl der ersten Endvorrichtungen.

## Revendications

1. Premier dispositif terminal (2), comprenant:
une unité de communication (205) configurée pour réaliser une communication radio; et
une unité de commande (203) configurée pour réaliser une commande de sorte qu'une réponse à une transmission de données à partir d'un second dispositif terminal (2) par l'intermédiaire d'une communication entre dispositifs doit être transmise au second dispositif terminal par l'intermédiaire de la communication entre dispositifs entre les premier et second dispositifs terminaux par l'intermédiaire d'un lien latéral,
dans lequel l'unité de commande (203) est configurée pour déterminer une ressource à utiliser pour la transmission de la réponse en fonction d'une condition liée à la communication entre dispositifs,
**caractérisé en ce que** l'unité de commande (203) est en outre configurée pour associer, à la réponse, un symbole utilisable pour la commande du gain dans la démodulation de la réponse, en fonction d'une condition prédéterminée.

2. Dispositif de communication selon la revendication 1,
dans lequel l'unité de commande (203) est configurée pour déterminer une ressource à utiliser pour la transmission de la réponse en fonction d'informations dont la notification est fournie à partir du second dispositif terminal en association avec la transmission des données.

3. Dispositif de communication selon la revendication 2,
dans lequel les informations dont la notification est fournie à partir du second dispositif terminal sont des informations concernant la ressource, en particulier dans lequel les informations concernant la ressource comportent des informations concernant un décalage temporel par rapport aux premières informations de commande auxquelles la ressource est associée.

4. Dispositif de communication selon la revendication 2,
dans lequel les informations dont la notification est fournie à partir du second dispositif terminal sont des informations concernant une condition de la communication entre dispositifs.

5. Dispositif de communication selon la revendication 4,
dans lequel les informations relatives à la condition de la communication entre dispositifs comportent au moins les unes parmi:
des informations concernant une séquence d'embrouillage des premières informations de commande auxquelles la ressource est associée, ou
des secondes informations de commande différentes des premières informations de commande et relatives à la communication entre dispositifs, en particulier dans lequel les secondes informations de commande comportent l'ID du processus HARQ.

6. Dispositif de communication selon l'une quelconque des revendications 2 à 4,
dans lequel un ensemble de valeurs pouvant être obtenues en tant qu'informations dont la notification est fournie à partir du second dispositif terminal est sélectivement commuté selon une condition prédéterminée, en particulier une condition liée à au moins l'un parmi:
une urgence associée à un paquet de données; ou
un niveau d'encombrement d'une bande de fréquences utilisée pour la communication entre dispositifs.

7. Dispositif de communication selon la revendication 1,
dans lequel l'unité de commande (203) est configurée pour déterminer une ressource à utiliser pour la transmission de la réponse en fonction d'informations concernant au moins l'un parmi:
une urgence associée à un paquet de données;
une capacité du dispositif de communication, liée à la communication entre dispositifs;
un niveau d'encombrement d'une bande de fréquences utilisée pour la communication entre dispositifs; ou
une occupation de la bande de fréquences par le dispositif de communication.

8. Dispositif de communication selon l'une quelconque revendication précédente,
dans lequel l'unité de commande (203) est configurée pour déterminer individuellement la ressource pour chacune des transmissions de la réponse à chacun d'une pluralité de seconds dispositifs terminaux ou pour déterminer la ressource commune à la transmission de la réponse à chacun d'une pluralité de seconds dispositifs terminaux.

9. Dispositif de communication selon l'une quelconque revendication précédente,
dans lequel l'unité de commande (203) est configurée pour associer, à la réponse, un symbole utilisable pour la commande de gain dans la démodulation de la réponse selon des informations transmises à partir du second dispositif terminal par l'intermédiaire de la communication entre dispositifs entre les premier et second dispositifs terminaux par l'intermédiaire d'une liaison latérale, et/ou selon que le symbole utilisable pour la commande de gain dans la démodulation des premières informations de commande auxquelles la ressource est associée, est associé aux premières informations de commande.

10. Second dispositif terminal (2), comprenant:
une unité de communication (207) configurée pour réaliser une communication radio; et
une unité de commande (203) configurée pour réaliser une commande de telle sorte que des données doivent être transmises à un premier dispositif terminal (2) par l'intermédiaire d'une communication entre dispositifs,
dans lequel l'unité de commande (203) est configurée pour réaliser une commande afin d'acquérir une réponse à la transmission des données, transmises à partir du premier dispositif terminal à l'aide d'une ressource à utiliser pour la transmission de la réponse en fonction d'une condition liée à la communication entre dispositifs entre les premier et second dispositifs terminaux, par l'intermédiaire d'un lien latéral,
**caractérisé en ce que** l'unité de commande (203) est configurée pour déterminer, en fonction d'une condition prédéterminée, lequel des schémas suivants doit être appliqué en tant que schéma d'allocation de la ressource:
un premier schéma d'allocation consistant à allouer individuellement la ressource à une pluralité de premiers dispositifs terminaux; ou
un second schéma d'allocation consistant à allouer la ressource commune à une pluralité de premiers dispositifs terminaux.

11. Dispositif de communication selon la revendication 10,
dans lequel l'unité de commande (203) est configurée pour allouer la ressource au premier dispositif terminal, et
commander de telle sorte que la notification des informations correspondant à un résultat d'allocation de la ressource doit être fournie au premier dispositif terminal.

12. Dispositif de communication selon la revendication 11,
dans lequel l'unité de commande (203) est configurée pour allouer individuellement la ressource à une pluralité de premiers dispositifs terminaux ou
allouer la ressource commune à une pluralité de premiers dispositifs terminaux, en particulier dans un cas où un réglage dans lequel la réponse ne doit pas être transmise à partir du premier dispositif terminal lors du décodage des données dans le premier dispositif terminal est réussi.

13. Dispositif de communication selon la revendication 11,
dans lequel l'unité de commande (203) est configurée pour déterminer, en fonction d'une condition prédéterminée, lequel des premier et second schémas doit être appliqué en tant que schéma d'allocation de la ressource en fonction d'une condition liée à au moins l'un parmi:
la quantité des premiers dispositifs terminaux auxquels les données doivent être transmises; ou
un niveau d'encombrement d'une bande de fréquences utilisée pour la communication entre dispositifs.

14. Procédé de communication à exécuter par un premier dispositif terminal (2), le procédé de communication comprenant:
la réalisation de communication radio;
la réalisation de commande de sorte qu'une réponse à la transmission de données à partir d'un second dispositif terminal (2) par l'intermédiaire d'une communication entre dispositifs doit être transmise au second dispositif terminal par l'intermédiaire de la communication entre dispositifs entre les premier et second dispositifs terminaux par l'intermédiaire d'un lien latéral, et
la détermination d'une ressource à utiliser pour la transmission de la réponse en fonction d'une condition liée à la communication entre dispositifs,
**caractérisé par** l'association, à la réponse, d'un symbole utilisable pour la commande de gain dans la démodulation de la réponse, en fonction d'une condition prédéterminée.

15. Procédé de communication à exécuter par un second dispositif terminal (2), le procédé de communication comprenant:
la réalisation de communication radio;
la réalisation de commande de telle sorte que des données doivent être transmises à un premier dispositif terminal (1) par l'intermédiaire d'une communication entre dispositifs, entre les premier et second dispositifs terminaux par l'intermédiaire d'une liaison latérale; et
la réalisation d'une commande pour acquérir une réponse à la transmission des données, transmises à partir du premier dispositif terminal à l'aide d'une ressource à utiliser pour la transmission de la réponse en fonction d'une condition liée à la communication entre dispositifs, entre les premier et second dispositifs terminaux, par l'intermédiaire d'une liaison latérale,
**caractérisé par** la détermination, en fonction d'une condition prédéterminée, duquel des schémas suivants doit être appliqué en tant que schéma d'allocation de la ressource:
un premier schéma d'allocation consistant à allouer individuellement la ressource à une pluralité de premiers dispositifs terminaux; ou
un second schéma d'allocation consistant à allouer la ressource commune à une pluralité de premiers dispositifs terminaux.
